(19) **Europäisches Patentamt / European Patent Office / Office européen des brevets**

(11) **EP 2 249 198 A1**

(12) **EUROPEAN PATENT APPLICATION**
published in accordance with Art. 153(4) EPC

(43) Date of publication:
**10.11.2010 Bulletin 2010/45**

(51) Int Cl.:
*G02F 1/13357* *(2006.01)* *G02F 1/1335* *(2006.01)*
*G02F 1/139* *(2006.01)*

(21) Application number: **08872466.1**

(22) Date of filing: **11.12.2008**

(86) International application number:
**PCT/JP2008/072543**

(87) International publication number:
**WO 2009/101745 (20.08.2009 Gazette 2009/34)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **15.02.2008 JP 2008035347**

(71) Applicant: **Sharp Kabushiki Kaisha
Osaka-shi, Osaka 545-8522 (JP)**

(72) Inventors:
  • **NANGO, Tomoko
    Osaka 545-8522 (JP)**
  • **KURIHARA, Takashi
    Osaka 545-8522 (JP)**
  • **KUME, Yasuhiro
    Osaka 545-8522 (JP)**
  • **HATA, Masayuki
    Osaka 545-8522 (JP)**

  • **OKAMOTO, Takaaki
    Osaka 545-8522 (JP)**
  • **MATSUMOTO, Kazuhito
    Osaka 545-8522 (JP)**
  • **YABUTO, Koji
    Osaka 545-8522 (JP)**
  • **FUJIMOTO, Hideki
    Osaka 545-8522 (JP)**
  • **HOHSHI, Norikazu
    Osaka 545-8522 (JP)**
  • **WADA, Masakazu
    Osaka 545-8522 (JP)**
  • **MATSUSHITA, Tomohisa
    Osaka 545-8522 (JP)**

(74) Representative: **Müller - Hoffmann & Partner
Patentanwälte
Innere Wiener Strasse 17
81667 München (DE)**

(54) **LIQUID CRYSTAL DISPLAY**

(57)    A backlight unit (60) is provided in such a manner that light (L3) incident from the backlight unit (60) to a liquid crystal display element (20) in a diagonal direction that causes the light to be likely to be emitted from the liquid crystal display element (20) in a normal direction thereof has lower intensity than light (L2) incident from the backlight unit (60) to the liquid crystal display element (20) in another diagonal direction.

FIG. 23

EP 2 249 198 A1

## Description

Technical Field

The present invention relates to a liquid crystal display device, particularly to a liquid crystal display device capable of realizing a high-contrast display.

Background Art

Liquid crystal display devices have been widely used as display devices. These liquid crystal display devices generally include a liquid crystal display element and a backlight unit, mainly. The liquid crystal display element has such a structure that a liquid crystal layer is sandwiched between transparent substrates, each of which is provided with a polarizer. Further, the backlight unit is configured to backlight a liquid crystal display panel included in the liquid crystal display element, and includes a light source, a light guide, a diffuser, and the like.

Recently, the liquid crystal display devices have been required to have a higher brightness and a higher contrast, etc. In response to these requests, various techniques have been proposed.

(Patent Literature 1)

To begin with, an art described in Patent Literature 1 is explained below.

A liquid crystal display element (liquid crystal display device) described in Patent Literature 1 includes BEF (product name: abbreviation of Brightness Enhancement Film), which is a reflective polarizer film with brightness enhancement effect made by Sumitomo 3M Limited. The BEF improves the liquid crystal display element in brightness, etc. Further, a backlight-unit-side polarizing film (polarizer) is provided with light diffusing means.

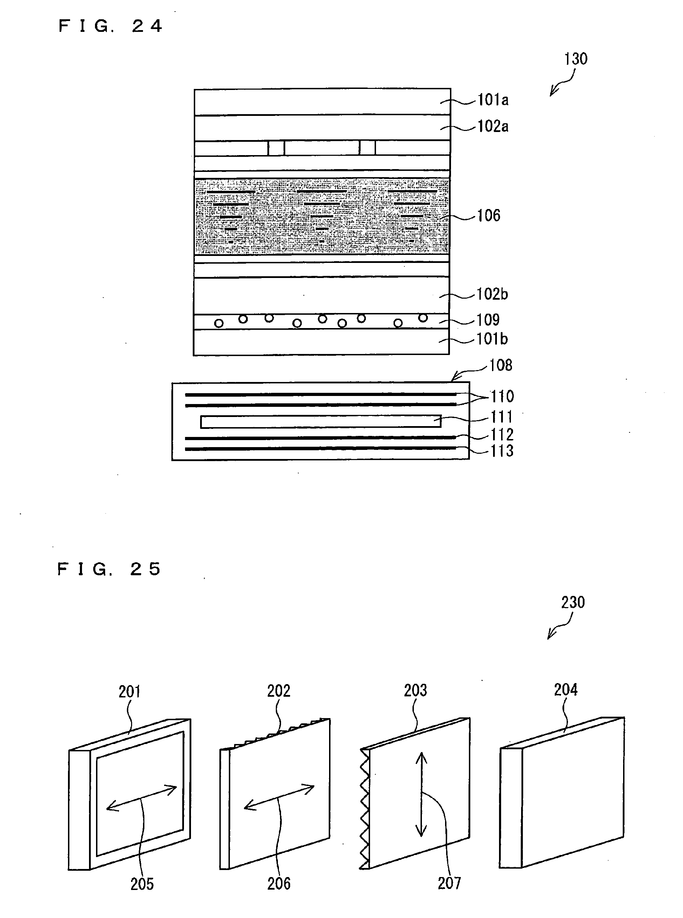

Hereinafter, the liquid crystal display device of Patent Literature 1 is described as to its specific configuration, referring to a cross-sectional view of Fig. 24 illustrating a configuration of a conventional liquid crystal display device. A liquid crystal display device 130 described in Patent Literature 1 is configured such that a TN (Twisted Nematic) liquid crystal layer 106 is sandwiched between substrates (transparent substrates) 102a and 102b, and polarizing films 101 a and 101 b are provided. Furthermore, a backlight unit 108 is provided on a back side of the liquid crystal display device 130. The backlight unit 108 is mainly constituted by a reflecting plate 113, a lower diffusing sheet 112, a light guiding plate 111, and a BEF 110.

Furthermore, a scattering-matter-included film 109 is provided between the substrate 102b on the backlight unit 108 side and the polarizing film 101b.

(Patent Literature 2)

Next, an art described in Patent Literature 2 is explained below.

A liquid crystal display device described in Patent Literature 2 is configured such that a liquid crystal display element (liquid crystal display element) in which a Twisted Nematic liquid crystal (liquid crystal layer) is sandwiched has a scattering layer between a polarizing plate and a light guiding plate, so that the scattering layer keeps a polarization state constant substantially.

With this configuration, the liquid crystal display device described in Patent Literature 2 makes it possible to realize bright display.

(Patent Literature 3)

Next, an art described in Patent Literature 3 is explained, referring to Fig. 25, which is a cross-sectional view illustrating a configuration of a liquid crystal display device described in Patent Literature 3.

As illustrated in Fig. 25, a liquid crystal display device 230 described in Patent Literature 3 includes a liquid crystal display element 201 and a backlight (backlight unit) 204. Between the liquid crystal display element 201 and the backlight 204, two lens films 202 and 203 are provided. The lens films 202 and 203 are laminated so that their prism orientation directions 206 and 207 cross each other at the right angles, and the prism orientation direction 206 of the lens film 202, which is the lens film located closer to the liquid crystal display element 201, is parallel to a transmission axis 205 of a polarizing plate, which is located on an incident light side of the liquid crystal display element 201.

With this configuration, the liquid crystal display device described in Patent Literature 3 makes it possible to realize display with a high brightness.

(Patent Literature 4)

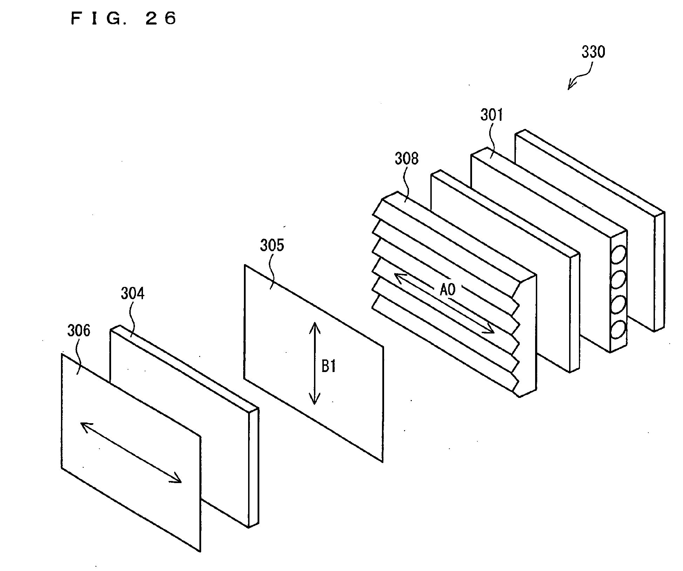

Next, an art described in Patent Literature 4 is explained, referring to Fig. 26, which is a cross-sectional view illustrating a configuration of a liquid crystal display device described in Patent Literature 4.

As illustrated in Fig. 26, a liquid crystal display device 330 described in Patent literature 4 includes a light incidence polarizing plate (polarizer) 305, a light exit polarizing plate (polarizer) 306, a liquid crystal panel 304 between the light incidence polarizing plate 305 and the light exit polarizing plate 306, and a backlight source (light source) 301 provided behind the liquid crystal panel 304. The liquid crystal display device 330 further includes a prism sheet 308 between the light incidence polarizing plate 305 and the backlight source 301.

A ridge-line direction A0 of the prism sheet 308 and a transmission axis direction B0 of the light incidence polarizing plate 305 cross each other at the right angles. With this configuration, the liquid crystal display device described in Patent Literature 4 makes it possible to realize display with a higher brightness.

(Patent Literature 5)

Next, an art described in the Patent Literature 5 is explained below.

A liquid crystal display device described in Patent Literature 5 is configured such that a polarized light- separating surface or the like is provided to face a light exit plane of a plane light guide (light guiding plate) of a backlight unit, and the polarized light-separating surface or the like can selectively reflect or transmit a polarization component.

With this configuration, the liquid crystal display device described in Patent Literature 5 is improved in brightness in its normal direction of a display surface, especially.

[Patent Literature 1]
Japanese Patent Application Publication, Tokukai No. 2003-121847 A (Publication Date: April 23, 2003)
[Patent Literature 2]
Japanese Patent Application Publication, Tokukai No. 2003-15133 A (Publication Date: January 15, 2003)
[Patent Literature 3]
Japanese Patent Application Publication, Tokukaihei No. 8-22000 A (Publication Date: January 23, 1996)
[Patent Literature 4]
Japanese Patent Application Publication, Tokukai No. 2000-122046 A (Publication Date: April 28, 2000)
[Patent Literature 5]
Japanese Patent Application Publication, Tokukai No. 2003-84283 A (Publication Date: March 19, 2003)

Summary of Invention

However, the conventional liquid crystal display devices have a problem of having an insufficient contrast.

Especially, the problem is that, in a liquid crystal display device in which a liquid crystal display element capable of realizing a high-contrast display (e.g., an MVA mode liquid crystal display element) is used, it is difficult to cause the liquid crystal display element to fully show a high contrast characteristic which the liquid crystal display element is supposed to have. The following description discusses this point.

(Configuration of Liquid Crystal Display Device)

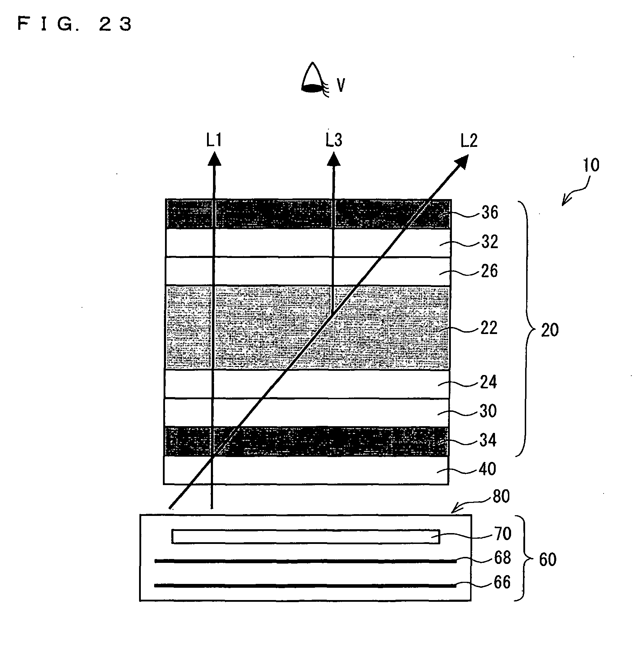

Fig. 23 is a cross-sectional view schematically illustrating an example of a configuration of a liquid crystal display device 10.

As illustrated in Fig. 23, the liquid crystal display device 10 includes a liquid crystal display element 20 and a backlight unit 60 provided behind the liquid crystal display element 20.

The liquid crystal display element 20 is configured such that a liquid crystal layer 22 is sandwiched between a first substrate 24 and a second substrate 26. On the first substrate 24, a first phase plate 30 and a first polarizing plate 34 are provided in this order. Similarly, on the second substrate 26, a second phase plate 32 and a second polarizing plate 36 are provided in this order.

Further, a reflective polarizer film with brightness enhancement effect 40 is provided between the first polarizing plate 34 and the backlight unit 60.

The backlight unit 60 includes a light source (not illustrated), a light guiding plate (not illustrated), two prism sheets (a first prism sheet 66 and a second prism sheet 68), and an upper diffusing sheet 70.

(Light Traveling Process)

Next, a process in which light travels through the liquid crystal display device 10 is explained below.

Whether or not light vertically emitted from the backlight unit 60 toward the liquid crystal display element 20 (L1 illustrated in Fig. 23) is emitted to outside the liquid crystal display device 10 depends on whether the liquid crystal layer 22 is in an ON or OFF state. Namely, while the liquid crystal layer 22 is in the ON state, the light L1 is emitted to outside the liquid crystal display device 10 without being blocked by the liquid crystal display element 20.

In contrast, while the liquid crystal layer 22 is in the OFF state, since the light L1 is blocked by the liquid crystal display element 20, the light L1 is not emitted to outside the liquid crystal display device 10.

Note that a ratio of (i) intensity of light emitted while the liquid crystal layer 22 is in the ON state (ON intensity) to (ii) intensity of light emitted while the liquid crystal layer 22 is in the OFF state (OFF intensity) is referred to as a contrast (ON intensity/OFF intensity).

Normally, the light L1 which enters into the liquid crystal display element 20 from its normal direction can realize high ON intensity and low OFF intensity in accordance with whether the liquid crystal layer 22 is in the ON or OFF state.

Especially, for example, in a case where the liquid crystal display element 20 is an MVA mode liquid crystal display element capable of realizing a high-contrast display, the light L1 incident from the vertical direction can realize a contrast of, for example, several thousands.

(Light from Vertical Direction)

Note here that, in order to realize a high contrast, it is particularly important to reduce the OFF intensity while the liquid crystal layer 22 is in the OFF state.

In this regard, the light L1 which enters into the liquid crystal display element 20 from the vertical direction of the liquid crystal display element 20 is likely to realize low OFF intensity.

This is because the light L1 which enters into the liquid crystal display element 20 from the vertical direction of the liquid crystal display element 20 changes and travels as originally designed since the light L1 is incident vertically to the polarizing plates (the first polarizing plate 34 and the second polarizing plate 36), the phase plates (the first phase plate 30 and the second phase plate 32), the liquid crystal layer 22, and the like.

(Inclined Light)

In contrast, light (inclined light) L2 which diagonally exits from the backlight unit 60 and then diagonally enters into the liquid crystal display element 20 is different from the light L1 in that the light L2 may reduce a contrast. The following description discusses this point.

While the liquid crystal layer 22 is in the OFF state, the inclined light L2 is normally invisible to a viewer V who views the liquid crystal display device 10 from a front direction (hereinafter normal direction) of the liquid crystal display device 10.

Therefore, it has been considered that the inclined light L2 does not cause a reduction in contrast seen from the normal direction.

(Light Bending)

However, a direction in which the inclined light L2 travels may change. Specifically, a light path may bend toward the viewer V in the liquid crystal display element 20 (see an arrow L3 illustrated in Fig. 23).

Examples of various reasons for such light bending occurring in the liquid crystal display element 20 include scattering in the liquid crystal layer 22, a color filter (not illustrated), and a TFT substrate (not illustrated).

Consequently, the inclined light L2 which is inclined with respect to the liquid crystal display element 20 is emitted from the liquid crystal display element 20 in the normal direction (direction indicated by an arrow L3 in Fig. 23) with a certain level of brightness.

It has been considered that the inclined light L2 does not influence a contrast seen from the normal direction. However, in reality, the light L2 bends its traveling direction (makes scattering) in the liquid crystal display element 20 and therefore a part of the inclined light L2 is emitted in the normal direction, causing reduction in the contrast seen from the normal direction.

Specifically, the light L1 which enters into the liquid crystal display element 20 from its normal direction and the inclined light L2 have different light path lengths and different amounts of optical change when the lights L1 and L2 are transmitted through the optical plates (e.g. phase plates and polarizing plates), the liquid crystal layer 22, and the like Consequently, the lights L1 and L2 have different contrasts. In general, a liquid crystal display is designed to have a better contrast seen from a normal direction. Accordingly, the inclined light L2 has a lower contrast than the light L1 incident from the normal direction.

Specifically, the phase plates (the first phase plate 30 and the second phase plate 32), the polarizing plates (the first polarizing plate 34 and the second polarizing plate 36), the liquid crystal layer 22, and the like are designed so that the ON intensity and the OFF intensity are optimized, that is, the ON intensity is large and the OFF intensity is small, with respect to light which enters into the liquid crystal display element 20 from the normal direction of the liquid crystal display element 20.

Especially for the OFF intensity, the liquid crystal display element 20 is optically designed so that light which enters into the liquid crystal display element 20 substantially from the normal direction of the liquid crystal display element 20 is blocked at the maximum.

Accordingly, the inclined light L2 which is not incident to the liquid crystal display element 20 from the normal direction is insufficiently blocked even while the liquid crystal layer 22 is in the OFF state. As a result, the inclined light L2 is obliquely emitted from the liquid crystal display element 20 as a leakage of light.

However, as described above, L2 which is incident from an oblique direction is scattered in the liquid crystal display element 20, and a part of the light is emitted in the normal direction (leakage of light).

Such a leakage of light is a particularly serious problem in a liquid crystal display device including a liquid crystal display element capable of realizing a high-contrast display.

(Prism Sheet)

Further, a liquid crystal display device is required to realize not only a high contrast display but also a high brightness display.

In order to satisfy the requirement, there is a case where the backlight unit 60 is provided with a prism sheet.

Note here that the prism sheet refers to an optical sheet on a surface of which grooves are provided in a given direction so that a direction in which light having been transmitted through the prism sheet travels is controlled.

Light having passed through the prism sheet has a certain directivity in terms of its intensity.

Consequently, some combinations of a liquid crystal display element and a backlight provided with the prism sheet prevent sufficiently exhibit a contract characteristic of the liquid crystal display element, resulting in a lower contrast.

The present invention has been made in view of the problems, and an object of the present invention is to provide a liquid crystal display device capable of realizing a high contrast display while causing a backlight unit to constantly function as a surface light source.

More specifically, an object of the present invention is to provide a liquid crystal display device capable of suppressing intensity of the inclined light which enters into a liquid crystal display element and causes a reduction in contrast.

Another object of the present invention is to provide a liquid crystal display device capable of realizing a higher contrast display by using a backlight unit provided with a prism sheet.

In order to solve the foregoing problem, a liquid crystal display device of the present invention includes: a liquid crystal display element including a liquid crystal layer, a light-incident side polarizing plate, and a light-exit side polarizing plate, the light-incident side polarizing plate and the light-exit side polarizing plate being provided on both sides of the liquid crystal layer, respectively; and a backlight unit causing light existing through a light exit plane thereof to be incident to the liquid crystal display element, the backlight unit being provided in such a manner that light incident from the backlight unit to the liquid crystal display element in a diagonal direction that causes the light to be likely to be emitted from the liquid crystal display element in a normal direction thereof has lower intensity than light incident from the backlight unit to the liquid crystal display element in another diagonal direction.

Further, the liquid crystal display device of the present invention may be arranged such that the backlight includes a light guiding plate, a diffusing sheet, and one or more prism sheets.

With the arrangement, it is possible to provide a liquid crystal display device capable of realizing a high contrast display while causing a backlight unit to constantly function as a surface light source. This is explained below.

(Design of Liquid Crystal Display Element)

A liquid crystal display element toward which light is emitted from a backlight unit is generally designed so that light which enters into the liquid crystal display element through its rear surface and from its normal direction and then exits from the liquid crystal display element through its front surface and in its normal direction has a maximum contrast. Specifically, optical characteristics of optical members such as a polarizing plate and a phase plate and a liquid crystal layer, each of which is included in the liquid crystal display element, are designed so that such light has a high contrast.

(Backlight Unit as Surface Light Source)

On the other hand, a backlight unit is required to emit light which is uniform in its light exit plane so that a display which has an in-plane uniform brightness is realized by the liquid crystal display element. In other words, the backlight unit is required to have a function as a surface light source.

In order to function as the surface light source, the backlight unit may include a diffusing sheet for causing light to be diffused (e.g. upper diffusing sheet, lower diffusing sheet, or upper diffusing sheet and lower diffusing sheet). With such configuration for example, light emitted from the backlight unit through the light exit plane of the backlight unit is normally oriented in various directions.

Accordingly, light which exits from the backlight unit and then enters into the liquid crystal display element encompasses not only light which enters into the liquid crystal display element from the normal direction of the liquid crystal display element but also light which enters into the liquid crystal display element from a direction which is inclined from the normal direction of the liquid crystal display element.

(Reduction in Contrast)

As described earlier, a contrast of the liquid crystal display element is designed on the premise of light which enters into the liquid crystal display element from the normal direction of the liquid crystal display element. Therefore, for example, in a case where the inclined light is scattered in the liquid crystal display element and is then emitted from the liquid crystal display element in the normal direction of the liquid crystal display element, the emitted light has no desired brightness (white or black). This is likely to cause a reduction in contrast.

Further, lights inclined with the same angle are likely to cause different reductions in contrast according to directions in which the lights are inclined.

The following explains one example of such inclined light. For example, in a liquid crystal display element in which two polarizing plates are provided in such a manner that absorption axis directions of the polarizing plates cross each other at right angles, light which is incident to the liquid crystal display element from a direction inclined to directions parallel to the absorption axes and to directions perpendicular to the absorption axes is less likely to be emitted in a normal direction of the liquid crystal display element.

On the other hand, light which is incident to the liquid crystal display element from a direction inclined to directions other than directions parallel to the absorption axes and to directions other than directions perpendicular to the absorption axes is more likely to be emitted in the normal direction of the liquid crystal display element.

Consequently, the light which is incident to the liquid crystal display element from a direction inclined to directions other than directions parallel to the absorption axes and to directions other than directions perpendicular to the absorption axes is more likely to cause a reduction in contrast compared with the light which is incident to the liquid crystal display element from a direction inclined to directions parallel to the absorption axes and to directions perpendicular to the absorption axes.

As described above, the likeliness of the inclined light being emitted from the normal direction of the liquid crystal display element is different according to a direction in which the inclined light is inclined.

In this regard, with the above arrangement, the backlight unit is provided in such a manner that out of incident lights from an inclined direction, incident light from a direction which is likely to cause the incident light to be emitted from a normal direction of the liquid crystal display element have smaller intensity.

As described earlier, this configuration brings about an effect of providing a liquid crystal display device which is capable of realizing a higher-contrast display while causing the backlight unit to constantly function as a surface light source.

The "direction" is an angle of rotation of an absorption axis etc. in plane of the incident-side polarizing plate etc., and a counterclockwise direction of a liquid crystal display device seen from a light-exit side is regarded as a forward direction.

Further, the liquid crystal display device of the present invention may be arranged to further include a reflective polarizer film with brightness enhancement effect provided between the liquid crystal display element and the backlight unit.

With this configuration, in spite of the bright enhancement film which may reduce a contrast, suppression of intensity of inclined light that is likely to be emitted from the liquid crystal display element in its normal direction allows realizing a high-contrast display.

Note that the reflective polarizer film with brightness enhancement effect refers to a film which, for example, in a case where polarized light which reaches the reflective polarizer film with brightness enhancement effect includes a p-wave and an s-wave, causes an increase in incident light toward, for example, a polarizing plate adjacent to the reflective polarizer film with brightness enhancement effect by causing one of the polarized waves such as the p-wave to be transmitted through the film and causing the remaining s-wave to be reflected on the film.

Further, it is preferable to arrange the liquid crystal display device of the present invention such that the liquid crystal display element and the backlight unit are provided to be close to each other.

Further, it is preferable to arrange the liquid crystal display device of the present invention such that a distance between the liquid crystal display element and the backlight unit is not less than 0 mm and not more than 10 mm.

With the arrangement, the liquid crystal display element and the backlight unit are positioned to be close to each other, specifically, with a distance of not less than 0 mm and not more than 10 mm for example.

Consequently, in spite of the fact that a short distance, particularly no distance between the liquid crystal display element and the backlight unit is likely to increase a reduction in contrast due to the inclined light, the above arrangement provides the backlight unit in an appropriately position, allowing suppression of the reduction in contrast.

Further, the liquid crystal display device of the present invention may be arranged such that the diagonal direction that causes the light to be likely to be emitted from the liquid crystal display element in a normal direction thereof and a prism axis of the prism sheet form an angle of not less than 20° and not more than 70°, or an angle of not less than 110° and not more than 160°.

Note here that the prism sheet refers to an optical sheet on a surface of which grooves are provided in a given direction so that a direction in which light having been transmitted through the prism sheet travels is controlled. The prism axis indicates a direction of the grooves.

With the arrangement, the diagonal direction that causes the light to be likely to be emitted from the liquid crystal display element in a normal direction thereof and a prism axis of the prism sheet form an angle of not less than 20° and not more than 70°, or an angle of not less than 110° and not more than 160°. This allows further suppressing a reduction in contrast. This is explained later.

That is, in a case where the backlight unit is provided with the prism sheet, the prism sheet controls a traveling direction of light, which gives a given directivity to intensity of emitted light. Specifically, out of light diagonally emitted from the light exit plane of the backlight unit, light inclined in a direction parallel to the prism axis of the prism sheet has higher intensity than light inclined in a direction perpendicular to the prism axis.

With the arrangement, a direction of the prism axis in which diagonally emitted light has higher intensity and a direction of light which is diagonally incident to the liquid crystal display element and is likely to be emitted therefrom in its normal direction are not the same. Specifically, the two directions form an angle of not less than 20° and not more than 70°, or an angle of not less than 110° and not more than 160°.

Consequently, light emitted from the backlight unit is less apt to serve as inclined light which causes a reduction in contrast.

Therefore, the above arrangement allows a liquid crystal display device having a prism sheet provided in a backlight unit for the purpose of increasing brightness of a liquid crystal display element in its normal direction or other purpose to suppress a reduction in contrast.

Further, it is preferable to arrange the liquid crystal display device of the present invention such that the liquid crystal display element is a vertical alignment mode liquid crystal display element of a linear polarization type, and an absorption axis of the light-incident side polarizing plate and a prism axis of the prism sheet form an angle of not less than - 25° and not more than 25°, or an angle of not less than 65° and not more than 115°.

Further, it is preferable to arrange the liquid crystal display device of the present invention such that the liquid crystal display element is a vertical alignment mode liquid crystal display element of a linear polarization type, and an absorption axis of the light-incident side polarizing plate and a prism axis of the prism sheet form an angle of not less than - 15° and not more than 15°, or an angle of not less than 75° and not more than 105°.

Further, it is more preferable to arrange the liquid crystal display device of the present invention such that the liquid crystal display element is a vertical alignment mode liquid crystal display element of a linear polarization type, and an absorption axis of the light-incident side polarizing plate and a prism axis of the prism sheet form an angle of not less than - 5° and not more than 5°, or an angle of not less than 85° and not more than 95°.

Further, it is preferable to arrange the liquid crystal display device of the present invention such that the liquid crystal display element is a vertical alignment mode liquid crystal display element of a circular polarization type, and an absorption axis of the light-incident side polarizing plate and a prism axis of the prism sheet form an angle of not less than - 43° and not more than 7°, or an angle of not less than 47° and not more than 97°.

Further, it is preferable to arrange the liquid crystal display device of the present invention such that the liquid crystal display element is a vertical alignment mode liquid crystal display element of a circular polarization type, and an absorption axis of the light-incident side polarizing plate and a prism axis of the prism sheet form an angle of not less than - 33° and not more than - 3°, or an angle of not less than 57° and not more than 87°.

Further, it is more preferable to arrange the liquid crystal display device of the present invention such that the liquid crystal display element is a vertical alignment mode liquid crystal display element of a circular polarization type, and an absorption axis of the light-incident side polarizing plate and a prism axis of the prism sheet form an angle of not less than - 23° and not more than - 13°, or an angle of not less than 67° and not more than 77°.

Further, it is preferable to arrange the liquid crystal display device of the present invention such that the liquid crystal display element is a TN mode liquid crystal display element, and an absorption axis of the light-incident side polarizing plate and a prism axis of the prism sheet form an angle of not less than - 25° and not more than 25°, or an angle of not less than 65° and not more than 115°.

Further, it is preferable to arrange the liquid crystal display device of the present invention such that the liquid crystal display element is a TN mode liquid crystal display element, and an absorption axis of the light-incident side polarizing plate and a prism axis of the prism sheet form an angle of not less than - 15° and not more than 15°, or an angle of not less than 75° and not more than 105°.

Further, it is more preferable to arrange the liquid crystal display device of the present invention such that the liquid crystal display element is a TN mode liquid crystal display element, and an absorption axis of the light-incident side polarizing plate and a prism axis of the prism sheet form an angle of not less than - 5° and not more than 5°, or an angle of not less than 85° and not more than 95°.

In each of the above arrangements, the backlight unit is provided in such a manner that the absorption axis of the polarizing plate and the prism axis of the prism sheet form the most appropriate angle according to the configurations of respective liquid crystal display elements.

Consequently, inclined light incident to the liquid crystal display device is less likely to be emitted therefrom in its normal direction, allowing further effectively subduing a reduction in contrast.

When the liquid crystal display element is of a vertical alignment mode employing a linear polarization type, the liquid crystal display element is generally capable of realizing a high contrast display. The above arrangement allows suppressing a reduction in such high contrast.

Further, it is preferable to arrange the liquid crystal display device of the present invention such that there are provided two prism sheets whose prism axes cross each other at a right angle.

With the arrangement, two prism sheets are provided in such a manner that prism axes of the two prism sheets cross each other at a right angle. This allows the liquid crystal display device to emit brighter light in the normal direction of the liquid crystal display device.

Further, it is preferable to arrange the liquid crystal display device of the present invention such that light exiting through the light exit plane of the backlight unit has a half width of not less than 28° and not more than 44°.

Further, it is preferable to arrange the liquid crystal display device of the present invention such that the half width is not less than 20° and not more than 40°.

(Half Width)

To begin with, a half width is explained below. As for a measured sample (e.g., a backlight unit) in which a half width is measured, an inclined angle at which light has an intensity which is half as high as an intensity of light exiting from the measured sample through its light exit plane and in its normal direction is referred to as a half width (degree). This is based on a characteristic that emitted light has a weaker intensity as the emitted light is more inclined from the normal direction.

With this configuration, the backlight unit has a half width of not more than 44°, preferably of not less than 20° and not more than 40°. This can realize a liquid crystal display device capable of carrying out a higher-contrast display while constantly functioning as a surface light source.

In this regard, since the backlight unit having the above configuration is designed such that a half width showing a diffusion characteristic of emitted light is set to an appropriate value, the backlight unit secures scattering characteristic of emitted light sufficient for enabling the backlight unit to serve as a surface light source while the backlight unit suppresses an intensity of inclined light which causes the reduction in contrast. This allows further suppressing the reduction in contrast in the liquid crystal display device.

As described above, the liquid crystal display device of the present invention is designed such that the backlight unit is provided in such a manner that light incident from the backlight unit to the liquid crystal display element in a diagonal direction that causes the light to be likely to be emitted from the liquid crystal display element in a normal direction thereof has lower intensity than light incident from the backlight unit to the liquid crystal display element in another diagonal direction.

Consequently, the present invention provides a liquid crystal display device capable of realizing a higher contrast display while causing a backlight unit to constantly function as a surface light source, to be more specific, a liquid crystal display device capable of suppressing intensity of inclined light which is incident to a liquid crystal display element and causes a reduction in contrast.

Brief Description of Drawings

Fig. 1

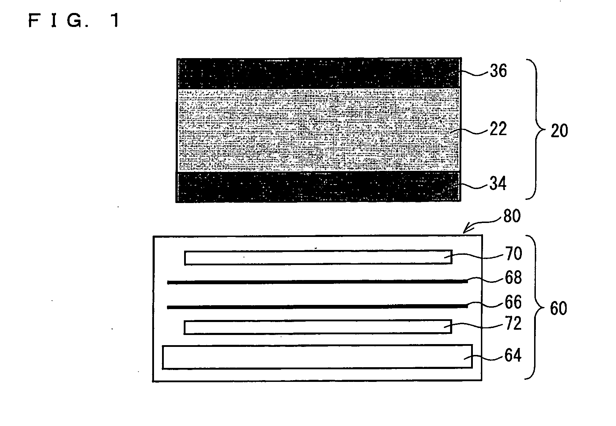

Fig. 1 is a cross-sectional view illustrating a liquid crystal display device of an embodiment of the present invention.
Fig. 2

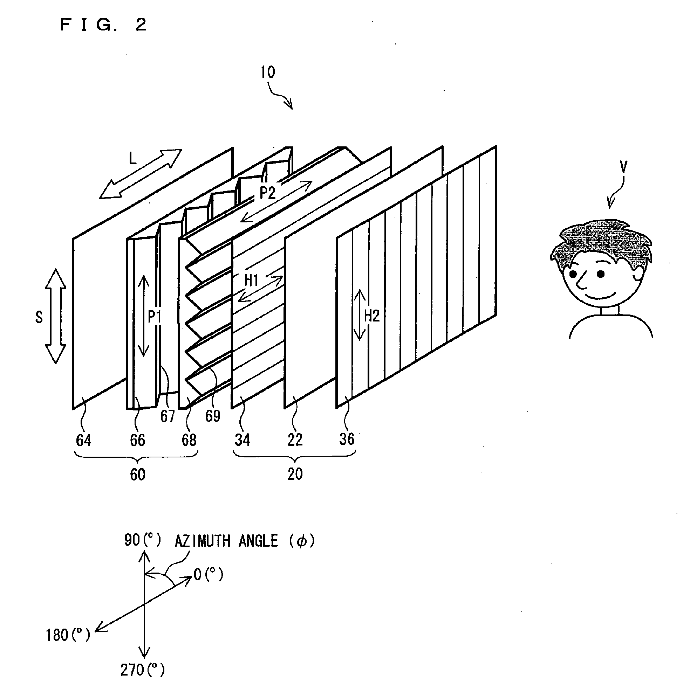

Fig. 2 is a perspective view illustrating a main part of a liquid crystal display device of an embodiment of the present invention.
Fig. 3

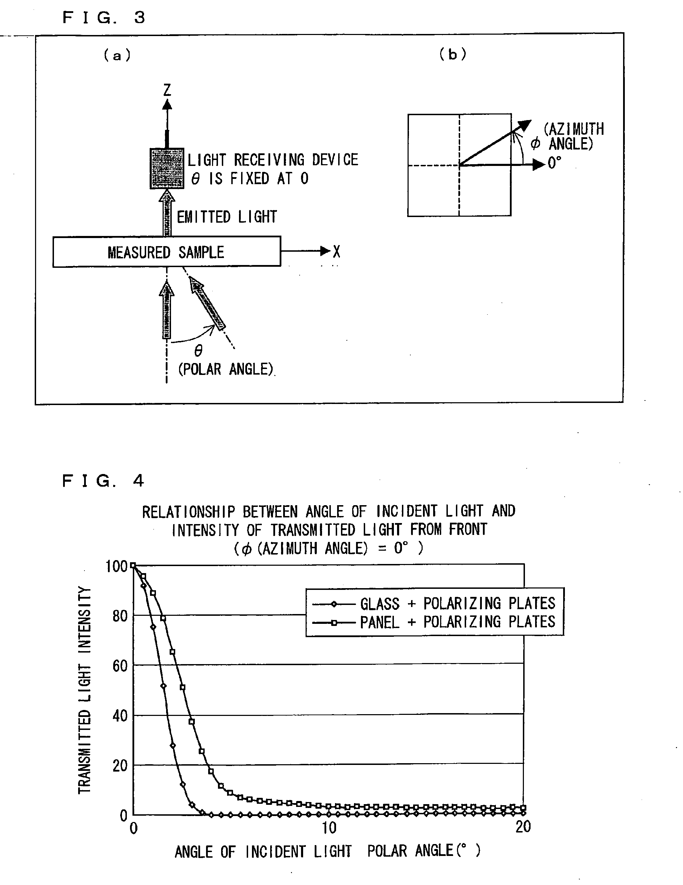

Fig. 3 is a drawing illustrating a measuring system for measuring an optical characteristic of transmitted light.
Fig. 4
Fig. 4 is a graph illustrating a relationship between a polar angle and a transmitted light intensity.
Fig. 5

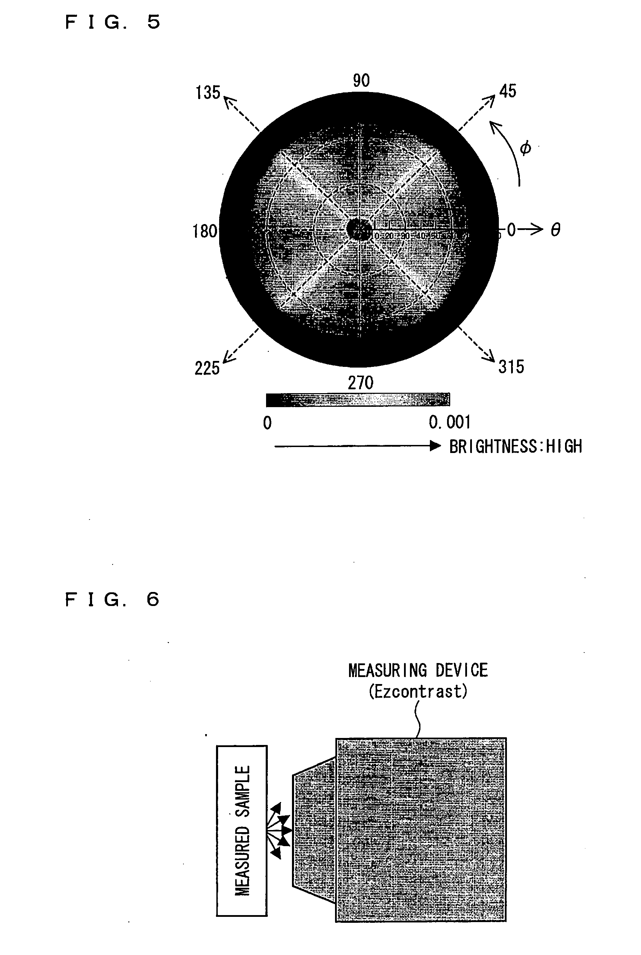

Fig. 5 is a graph illustrating a relationship between an angle of incidence and a transmitted light intensity.
Fig. 6
Fig. 6 is a drawing illustrating a measuring system for measuring an optical characteristic of light emitted from a backlight unit.
Fig. 7

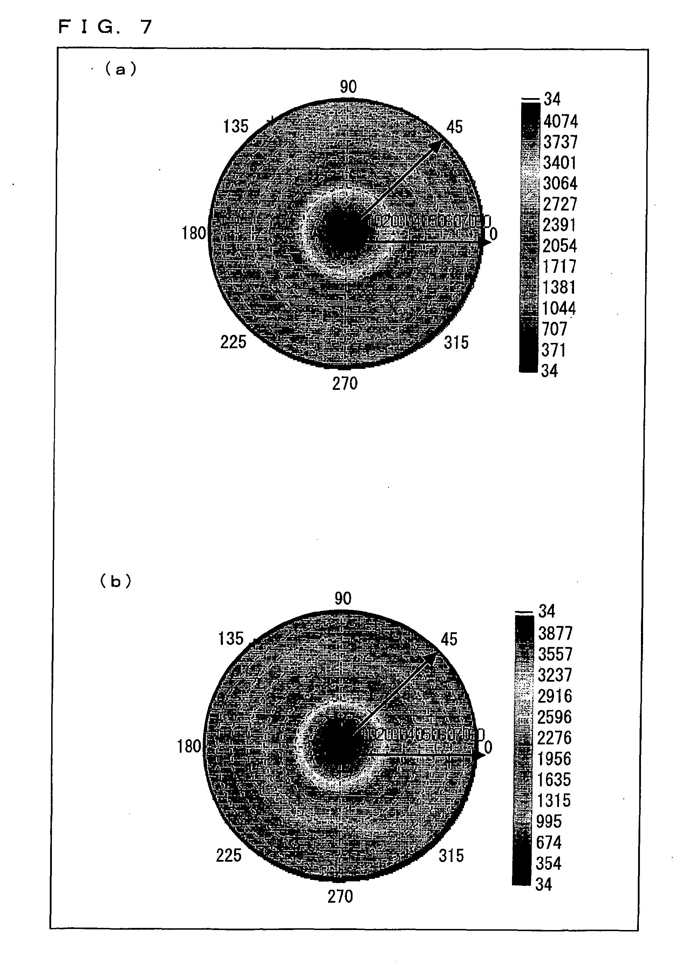

Fig. 7 is a drawing illustrating intensity of light emitted from a backlight unit.
Fig. 8

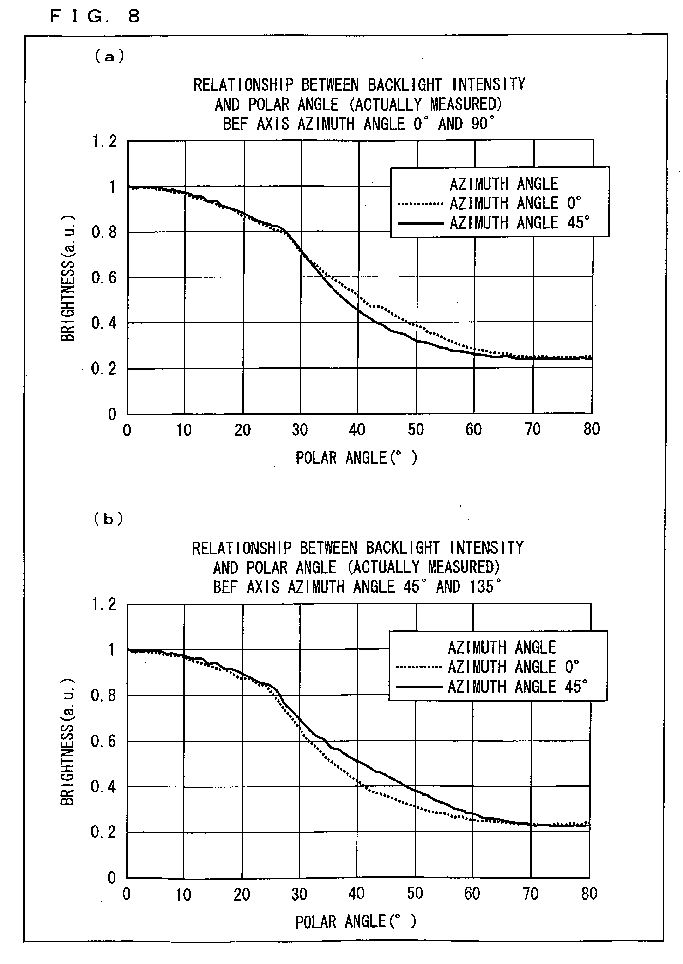

Fig. 8 is a drawing illustrating a relationship between a prism axis and intensity of light.
Fig. 9

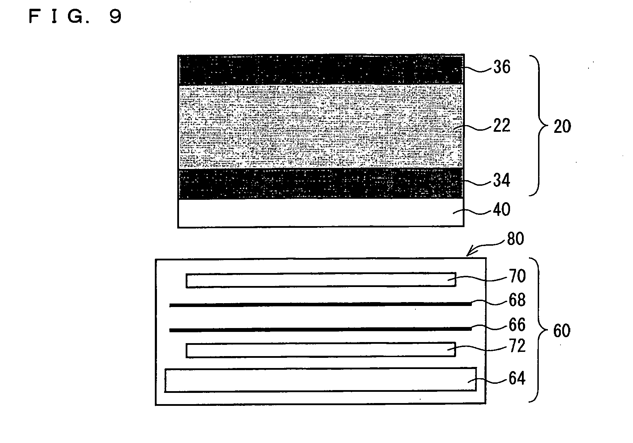

Fig. 9 is a cross sectional view illustrating a liquid crystal display device of another embodiment of the present invention.
Fig. 10

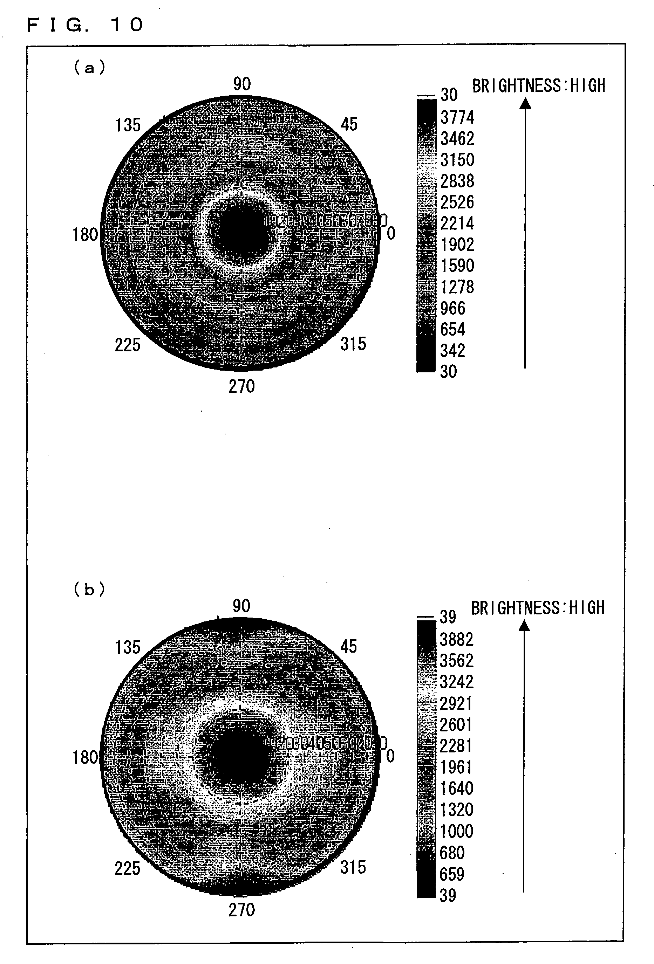

Fig. 10 is a drawing illustrating intensity of light emitted from a backlight unit.
Fig. 11

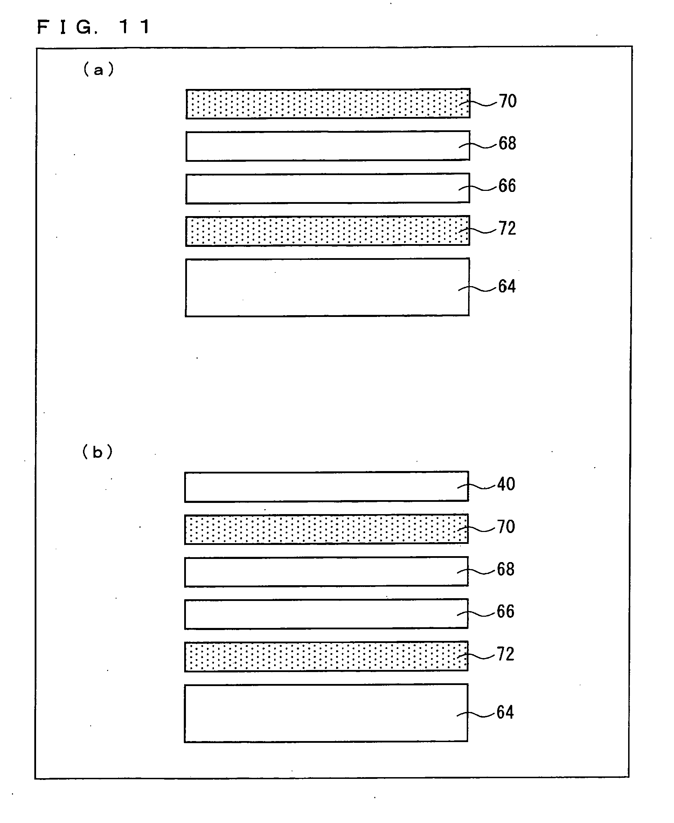

Fig. 11 is a cross sectional view schematically illustrating a configuration of a sample whose half width etc. is to be measured.
Fig. 12

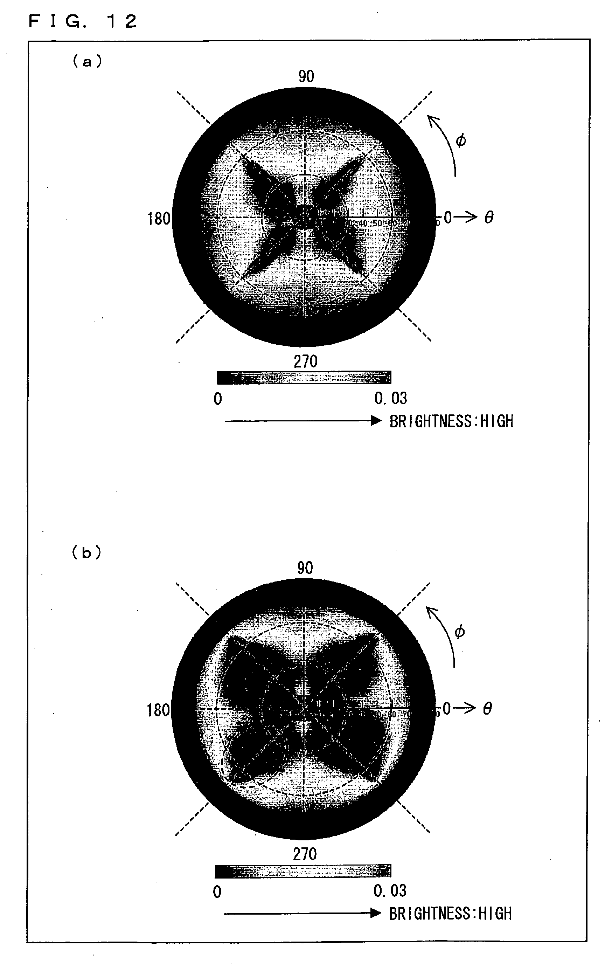

Fig. 12 is a drawing illustrating intensity of light emitted from a liquid crystal display element.
Fig. 13

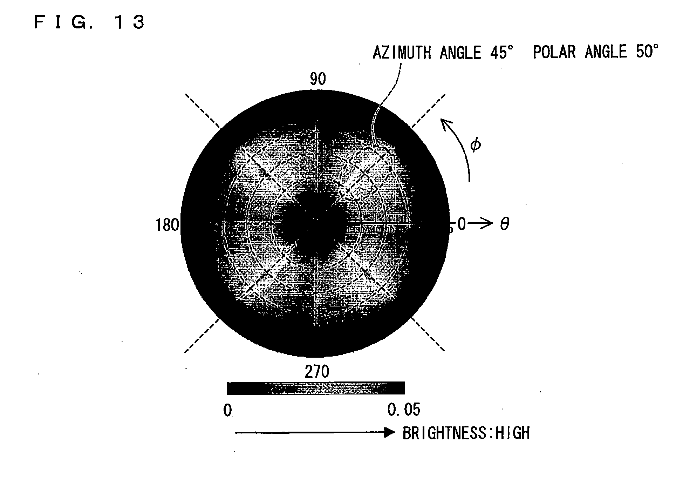

Fig. 13 is a graph illustrating a difference in light exiting from the liquid crystal display device between (i) the liquid crystal display device including a reflective polarizer film with brightness enhancement effect and (ii) the liquid crystal display device including no reflective polarizer film with brightness enhancement effect.
Fig. 14

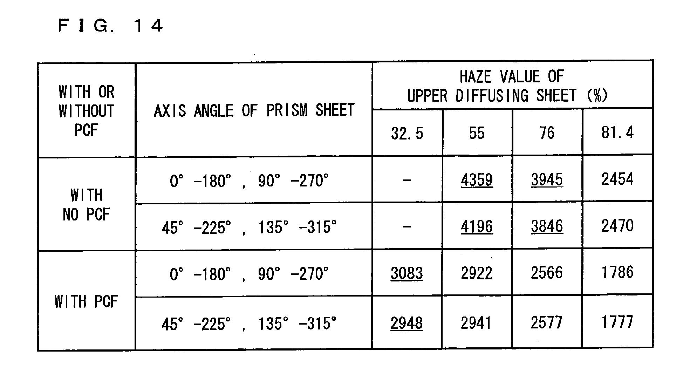

Fig. 14 is a drawing illustrating a front contrast of a liquid crystal display device.
Fig. 15

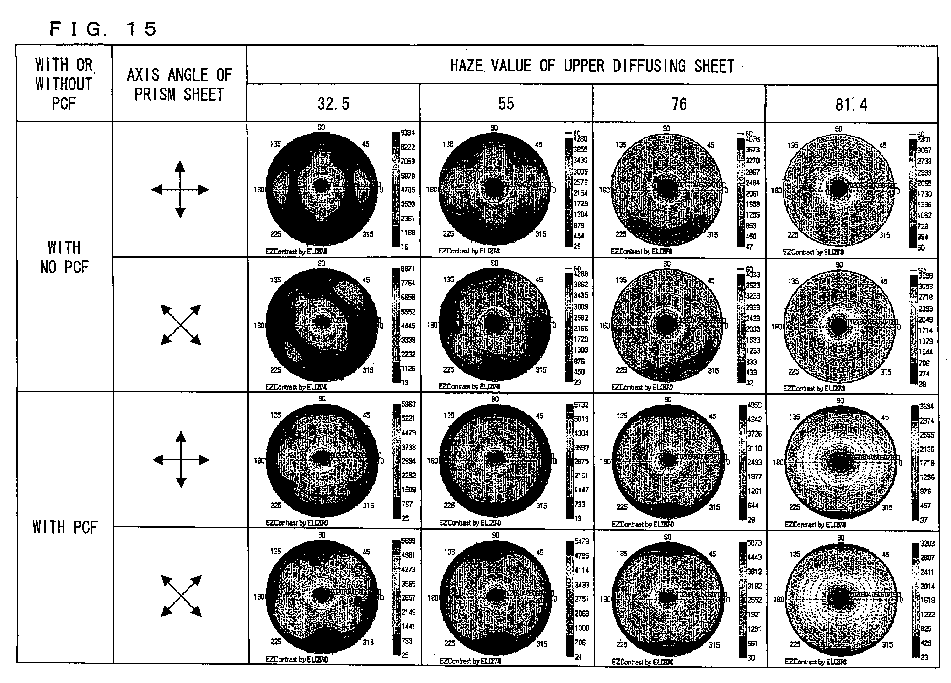

Fig. 15 is a drawing illustrating intensity distribution of a backlight unit.
Fig. 16

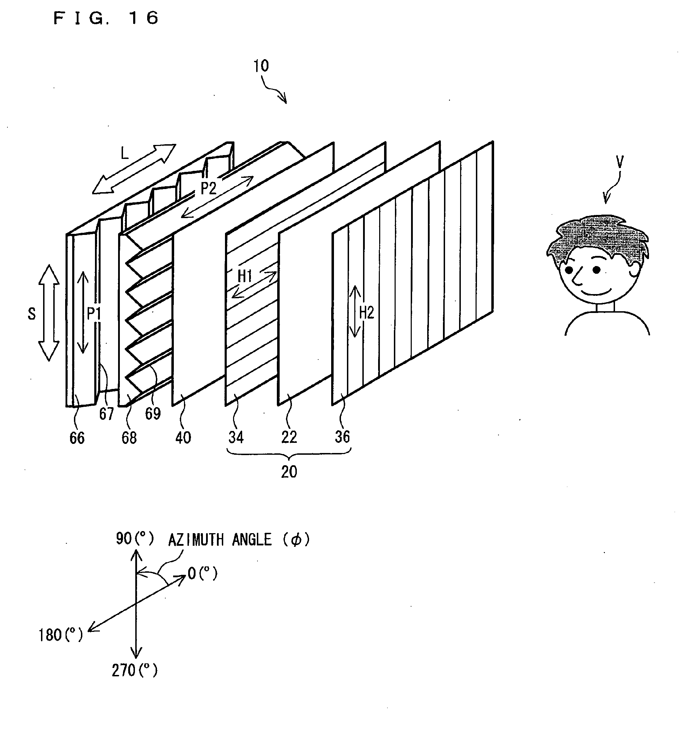

Fig. 16 is a perspective view illustrating a main part of a liquid crystal display device of an embodiment of the present invention.
Fig. 17

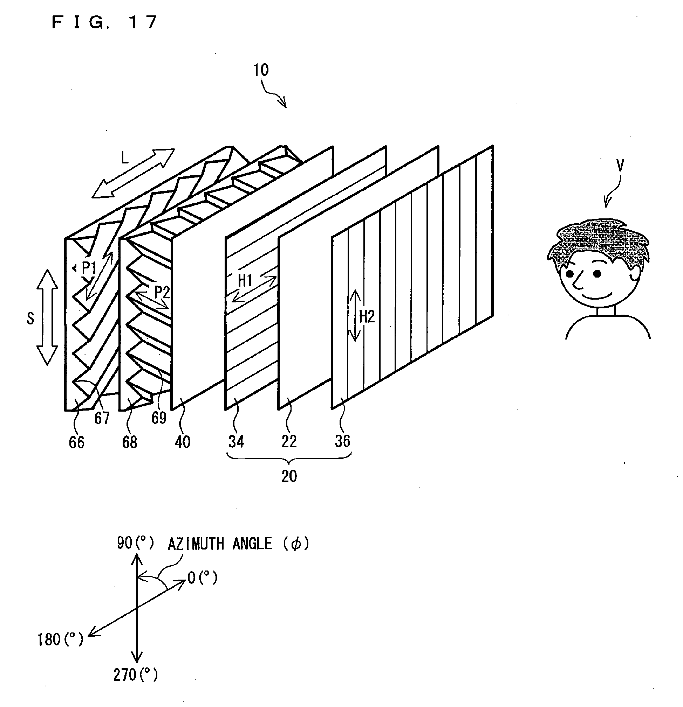

Fig. 17 is a perspective view illustrating a main part of a liquid crystal display device.
Fig. 18

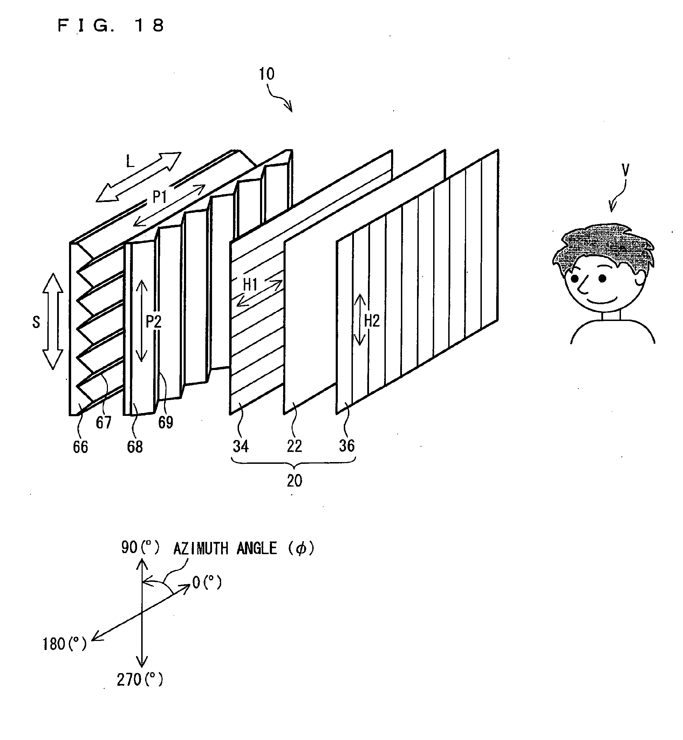

Fig. 18 is a perspective view illustrating a main part of a liquid crystal display device of another embodiment of the present invention.
Fig. 19

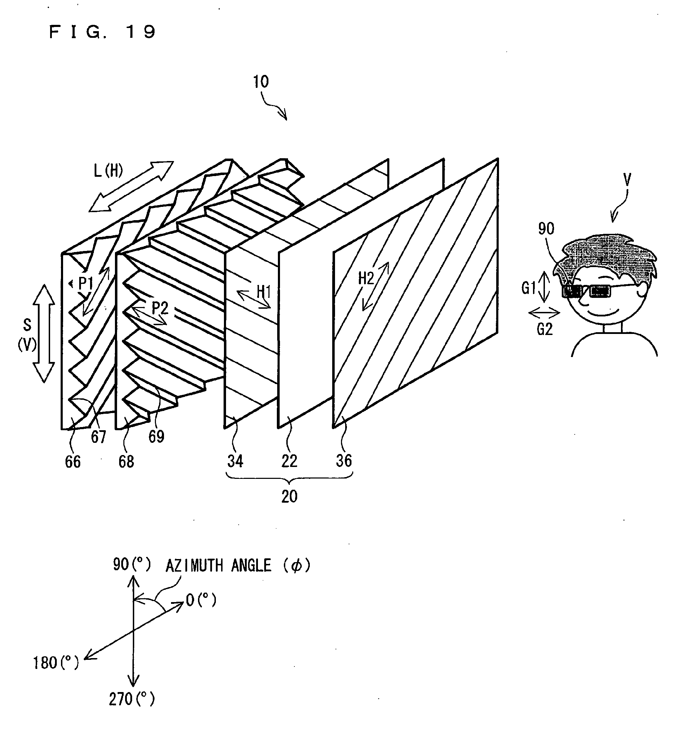

Fig. 19 is a perspective view illustrating a main part of a liquid crystal display device of still another embodiment of the present invention.
Fig. 20

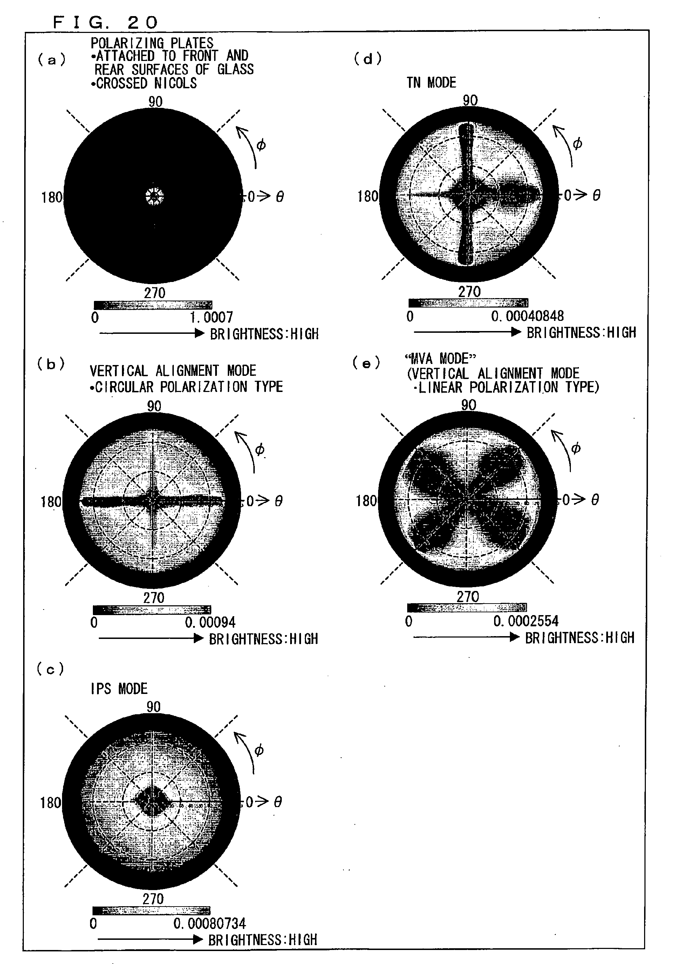

Fig. 20 has graphs illustrating light scattering characteristics of respective liquid crystal display modes.
Fig. 21

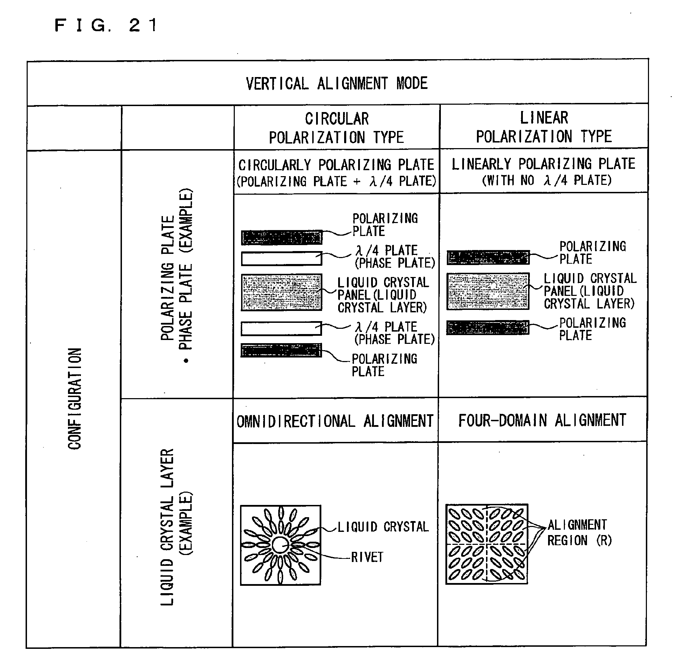

Fig. 21 is a chart illustrating differences between a circular polarization type liquid crystal display device and a linear polarization type liquid crystal display device each of which is of a vertical alignment mode.
Fig. 22

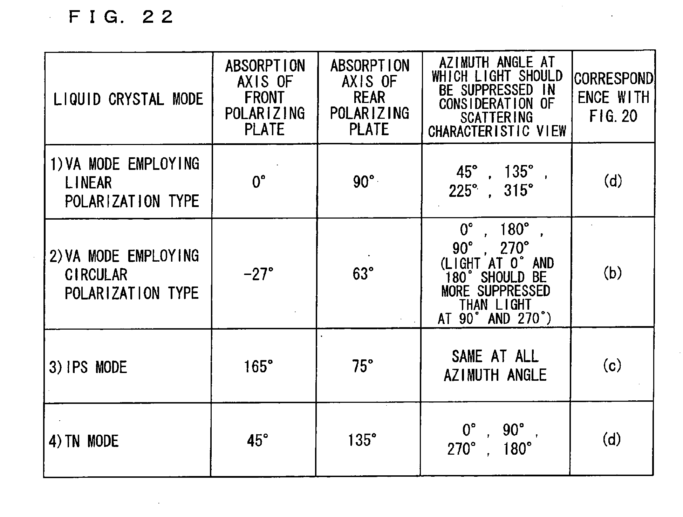

Fig. 22 is a table showing azimuth angles at which inclined light is not to be incident.
Fig. 23
Fig. 23 is a cross-sectional view schematically illustrating a configuration of the liquid crystal display device.
Fig. 24
Fig. 24 is a cross-sectional view schematically illustrating a configuration of a conventional liquid crystal display device.
Fig. 25
Fig. 25 is a cross-sectional view schematically illustrating a configuration of a conventional liquid crystal display device.
Fig. 26
Fig. 26 is a cross-sectional view schematically illustrating a configuration of a conventional liquid crystal display device.

Reference Signs List

| | |
|---|---|
| 10 | Liquid crystal display device |
| 20 | Liquid crystal display element |
| 22 | Liquid crystal layer |
| 34 | First polarizing plate (incident side polarizing plate) |
| H1 | Absorption axis direction (absorption axis) |
| 36 | Second polarizing plate (exit side polarizing plate) |
| H2 | Absorption axis direction (absorption axis) |
| 40 | Reflective polarizer film with brightness enhancement effect |
| 60 | Backlight unit |
| 64 | Light guiding plate |
| 66 | First prism sheet (Prism sheet) |
| 67 | Groove |
| P1 | Groove direction (prism axis) |
| 68 | Second prism sheet (Prism sheet) |
| 69 | Groove |
| P2 | Groove direction (prism axis) |
| 70 | Upper diffusing sheet (Diffusing sheet) |
| 72 | Lower diffusing sheet (Diffusing sheet) |
| 80 | Light exit plane |
| R | Orientation region |

Description of Embodiments

[First Embodiment]

An embodiment of the present invention is described below, referring to the drawings.

(Liquid Crystal Display Device)

A liquid crystal display device 10 of the present invention has a configuration substantially similar to the configuration of the liquid crystal display device 10 already described, referring to Fig. 23. The liquid crystal display device 10 of the present invention is explained below, referring to Fig. 1, which is a cross-sectional view schematically illustrating the liquid crystal display device of the present embodiment.

Namely, the liquid crystal display device 10 of the present invention mainly includes a liquid crystal display element 20 and a backlight unit 60. Light emitted from the backlight unit 60 through its light exit plane 80 enters into the liquid crystal display element 20, whereby a display is carried out.

(Liquid Crystal Display Element)

To begin with, the liquid crystal display element 20 is explained below. The liquid crystal display element 20 of the present embodiment is configured to be a linear polarization type of a vertical alignment mode.

Namely, a liquid crystal layer 22 sandwiched between two substrates (not illustrated) which face each other is sandwiched between a first polarizing plate 34 which serves as an incident side polarizing plate and a second polarizing plate 36 which serves as a light exit polarizing plate. Liquid crystal molecules included in the liquid crystal layer 22 have a multi-domain alignment (e.g., a four-domain alignment) in plan view.

(Backlight Unit)

Next, the backlight 60 of the present embodiment is explained below. The backlight unit 60 includes a light source (not illustrated), a light guiding plate 64, two diffusing sheets (an upper diffusing sheet 70 and a lower diffusing sheet 72), and two prism sheets (a first prism sheet 66 and a second prism sheet 68) (see Fig. 1).

These members are laminated in the order of: the light guiding plate 64, the lower diffusing sheet 72, the first prism sheet 66, the second prism sheet 68, and the upper diffusing sheet 70. Note that, in the present embodiment, a diffusing sheet which has a haze value of 55.0% was used as the upper diffusing sheet 70 and a diffusing sheet which has a haze value of 74.5% was used as the lower diffusing sheet 72.

(Prism Sheet)

Specifically, in the backlight unit 60, the first and second prism sheets 66 and 68 have, on their respective top surfaces, linear grooves constituted by triangular peaks and valleys (see Fig. 2). That is, the first and second prism sheets 66 and 68 have grooves 67 and grooves 69 on their respective top surfaces.

The respective grooves of the first and second prism sheets 66 and 68 are provided so that directions of the respective grooves (arrows P1 and P2 in Fig. 2) cross each other at right angles.

(Direction)

A more specific explanation will be made using an azimuth angle (Φ).

In the liquid crystal display device 10 having substantially a rectangular shape, orthogonal coordinates are made of long-side directions (two-side arrow L in Fig. 2) and short-side directions (arrow S in Fig. 2) of the liquid crystal display device 10, and the directions of the two-side arrow L are regarded as 0° and 180° and the directions of the two-side arrow S are regarded as 90° and 270°.

A rotation angle counterclockwise from the 0 position (an angle from 0°) is regarded as an azimuth angle (Φ).

In this case, the direction P1 of the grooves 67 (groove direction, prism axis) of the first prism sheet 66 of the present embodiment has an azimuth angle (Φ) of 90° and 270° (hereinafter 90°) and the direction P2 of the grooves 69 of the second prism sheet 68 of the present embodiment has an azimuth angle (Φ) of 0 and 180° (hereinafter 0°).

(Polarizing Plate)

The following explains a direction in which a polarizing plate of the liquid crystal display device 10 of the present embodiment is provided.

In the present embodiment, the first polarizing plate 34 is provided in such a manner that a direction of an absorption axis thereof (two-side arrow H1 in Fig. 2) is parallel to the long-side direction L, i.e. a direction where the azimuth angle (Φ) is 0°.

With the liquid crystal layer 22 between the first polarizing plate 34 and the second polarizing plate 36, the second polarizing plate 36 is provided in such a manner that a direction of an absorption axis thereof (two-side arrow H2 in Fig. 2) is parallel to the short-side direction S, i.e. a direction where the azimuth angle (Φ) is 90°.

That is, the two polarizing plates (first polarizing plate 34 and second polarizing plate 36) are positioned in a so-called crossed Nicols relationship so that the absorption axes of the two polarizing plates cross each other at a right angle.

(Prism Sheet and Polarizing Plate)

As explained above, in the present embodiment, the prism sheet and the polarizing plate close to each other, i.e. the second prism sheet 68 and the first polarizing sheet 34 are designed such that the prism axis P2 of the second prism sheet 68 and the absorption axis direction H1 of the first polarizing plate 34 face to the azimuth angle (Φ) of 0°, and therefore are parallel to each other.

That is, the prism axis P1 of the first prism sheet 66 is in the azimuth angle (Φ) of 90°, the prism axis P2 of the second prism sheet 68 is in the azimuth angle (Φ) of 0°, the absorption axis direction H1 of the first polarizing plate 34 is in the azimuth angle (Φ) of 0°, and the absorption axis direction H2 of the second polarizing plate 36 is in the azimuth angle (Φ) of 90°.

(Prism Sheet)

The prism sheet is explained in more detail.

In general, the liquid crystal display device 10 is required to carry out a bright display. In particular, the liquid crystal display device 10 is required to have a high display brightness for a viewer V seeing the liquid crystal display device 10 from a normal direction.

In order to carry out a bright display in the normal direction, it is effective to emit light from the backlight unit 60 mainly in the normal direction. Therefore, the prism sheet is used in order to put the light emitted from the backlight unit 60 in the normal direction.

The prism sheet is an optical sheet capable of controlling a traveling direction of light having passed through the sheet. An example of the prism sheet is an optical sheet on which grooves are provided in a certain direction.

In the present embodiment, the two prism sheets 66 and 68 are provided in such a manner that groove directions (prism axes) P1 and P2 cross each other at a right angle. Consequently, both in the short-side direction S and the long-side direction L of the backlight unit 60, it is possible to put light emitted from the backlight unit 60 in a normal direction.

Therefore, the liquid crystal display device 10 can carry out a more bright display.

(Contrast)

The liquid crystal display device 10 is required to carry out not only a bright display but also a high-contrast display. Accordingly, Next, a contrast of the liquid crystal display device 10 is explained below.

As explained above, the viewer V generally sees the liquid crystal display device 10 from the normal direction thereof. Accordingly, the liquid crystal display element 20 included in the liquid crystal display device 10 is designed to be able to carry out a high contrast display in the normal direction. That is, the liquid crystal display element 20 is designed such that light which enters into the back surface of the liquid crystal display element 20 from the normal direction and is emitted from the front surface of the liquid crystal display element 20 in the normal direction realizes a high contrast.

Consequently, inclined light incident to the liquid crystal display element 20 may reduce a contrast.

. Such a reduction in contrast due to inclined light is more noticeable in the liquid crystal display device 10 which is capable of realizing a high-contrast display and includes an MVA mode liquid crystal display element such as the liquid crystal display element 20.

(Reduction in Contrast, Influence on Panel)

Next, a reduction in contrast due to inclined light is more specifically explained below.

As described earlier, light exiting from the backlight unit 60 travels to the viewer V through the two polarizing plates and the liquid crystal layer sandwiched by the two polarizing plates.

Then, an influence of a liquid crystal display panel on a leakage of light due to the inclined light is explained below. Note here that the liquid crystal display panel is obtained by removing the two polarizing plates (the first and second polarizing plates) from the liquid crystal display element 20. Specifically, the liquid crystal display panel refers to a liquid crystal panel including the liquid crystal layer 22 which is sandwiched between two substrates on which a color filter, a switching element, and the like are provided.

Fig. 4 is a graph illustrating, for two kinds of measured samples (first and second measured samples, which are detailed later), intensities of light transmitted in a normal direction to a display surface of each of the measured samples, with respect to the inclined light.

(Measuring System)

Initially, a measuring system for measuring optical characteristics such as intensity of the transmitted light etc. is explained below with reference to (a) and (b) of Fig. 3. (a) and (b) of Fig. 3 are drawings showing a measuring system for measuring optical characteristics such as intensity of transmitted light.

As shown in (a) of Fig. 3, in the measuring system for measuring optical characteristics, light is emitted into a measured sample through a rear surface of the measured sample, and the light transmitted through the measured sample is received by a light receiving device provided on a front surface of the measured sample, thereby measuring an intensity of the received light.

Note here that an inclined angle from a normal direction of a plane of the measured sample is referred to as a polar angle ($\theta$) (see (a) of Fig. 3) and an angle of a left-handed rotation from a lateral direction on the plane is referred to as an azimuth angle ($\Phi$) (see (b) of Fig. 3).

Note that the measuring system allows (i) an incidence direction of incident light to be inclined in a direction of the polar angle ($\theta$) and (ii) the inclined incident light to rotate in a direction of the azimuth angle ($\Phi$).

On the other hand, the light receiving device is fixed at the polar angle ($\theta$) of 0° (azimuth angle ($\Phi$) of 0°), i.e., in the normal direction of the plane of the measured sample.

Note that a measuring device for carrying out measurement as mentioned above is not particularly limited. For example, LCD5200 (product name, made by OTSUKA ELECTRONICS CO., LTD.) is usable for such measurement.

(Incidence Angle and Intensity of Transmitted Light)

Next, with reference to Fig. 4, an explanation is made as to intensity of transmitted light with respect to inclined light in two kinds of measured samples (first and second measured samples) measured by the measuring system.
The first measured sample is obtained by attaching polarizing plates to both sides of a glass substrate, respectively, so that absorption axes of the respective polarizing plates cross each other at right angles (see "glass + polarizing plates" of Fig. 4). The second measured sample is a liquid crystal display element (obtained by attaching polarizing plates to the liquid crystal display panel (see "panel + polarizing plates" of Fig. 4)).
Fig. 4 shows a relationship between an angle (polar angle (θ)) of incident light and a transmitted light intensity for the two measured samples.
Note that, in each of the "glass + polarizing plates" and "panel + polarizing plates", the two polarizing plates are positioned in a crossed Nicols relationship in which absorption axes of the respective two polarizing plates cross each other at right angles. Specifically, the absorption axis of a rear polarizing plate (polarizing plate located on a side on which light is incident during measurement. Corresponding to the first polarizing plate 34) is oriented in a direction of the azimuth angle (θ) of 0°. On the other hand, the absorption axis of a front polarizing plate (polarizing plate located on a side from which light exists during measurement. Corresponding to the first polarizing plate 36) is oriented in a direction of the azimuth angle (θ) of 90°.
On an outer side of the back side polarizing plate, A-PCF (Polarization Conversion Film) (product name, made by NITTO DENKO CORPORATION) is further provided as a brightness enhancing film.
As is evident from intensity of transmitted light in Fig. 4, both of the two measured samples ("glass + polarizing plates" and "panel + polarizing plates") have their respective lower transmitted light intensities as incident light is inclined from the normal direction of the respective samples.
Note that the transmitted light intensity decreases more sharply in "glass + polarizing plates". In other words, the inclined light is more likely to be emitted in the normal direction (a direction of the polar angle (θ) of 0°) in "panel + polarizing plates" in which a liquid crystal display panel is added to "glass + polarizing plates".
This seems to be because light which enters into the measured sample is likely to be scattered and to change its traveling direction in the liquid crystal display panel. Then, inclined light changes its traveling direction in the liquid crystal display panel and is emitted in a normal direction of the liquid crystal display panel, resulting in a reduction in contrast.
Note that a measurement result illustrated in Fig. 4 is obtained by causing the incident light to be inclined in the direction of the azimuth angle (Φ) of 0°, i.e., in a direction parallel to the absorption axis of the back side polarizing plate.

(θ and Φ Dependencies of Incident Light)

Tendency of inclined light to be transmitted in a normal direction depends particularly on an azimuth angle Φ of the inclined light. This tendency is explained below, referring to Fig. 5. Fig. 5 is a graph illustrating the transmitted light intensities for a measured sample similar to the "panel + polarizing plates" in a case where the polar angle (θ) and the azimuth angle (Φ) of incident light are changed.
Namely, the measured sample used for the measurement illustrated in Fig. 5 is obtained by attaching polarizing plates to both sides (front and rear surfaces) of a liquid crystal display panel in a crossed Nicols relationship. Note that the absorption axis of the back side polarizing plate (the polarizing plate located on a side where light is incident during measurement) is oriented in a direction of the azimuth angle (Φ) of 0°, and the absorption axis of the front polarizing plate (the polarizing plate located on a side where light is emitted during measurement) is oriented in a direction of the azimuth angle (Φ) of 90°.
Fig. 5 shows that, in a range of the polar angle (θ) of 0° to 70°, inclined light is emitted in a normal direction at substantially all the azimuth angles (Φ). Fig. 5 also shows that the inclined light is likely to be emitted in the normal direction particularly in the azimuth angles (Φ) of 45°, 135°, 225°, and 315°.
Conditions for measuring intensity of the transmitted light etc., such as a measuring system, correspond to those of the measuring system explained above with reference to (a) and (b) of Fig. 3.

(Behavior of Inclined Light)

As described earlier, in the liquid crystal display element 20, inclined light may change its traveling direction and be emitted in a normal direction, i.e., in a direction of the viewer V of the liquid crystal display device 10. In addition, the inclined light is likely to behave differently from light incident from the normal direction due to a difference in optical path length etc. during transmission through the liquid crystal display element 20. Specifically, light may not be sufficiently blocked, for example, even in a case where the liquid crystal layer 22 is in an OFF state (the OFF state of the liquid crystal layer 22 refers to a state in which a black display is carried out by a liquid crystal display element, i.e., a state in which the crystal display element has the lowest transmittance).

As a result, it is often that the inclined light is emitted as a leakage of light in the normal direction, reaching the viewer V's eyes.

Accordingly, in order to realize a high contrast, it is required that the inclined light be less likely to be emitted in the normal direction.

In order to more efficiently increase a contrast (prevent a reduction in contrast), it is effective to prevent light from being incident from directions whose azimuth angles are 45°, 135°, 225°, and 315°. This is because light incident from such directions is likely to cause leakage of light.

(Prism Axis and Intensity of Exiting Light)

In this regard, the liquid crystal display device 10 of the present embodiment is designed such that a groove direction (prism axis) of a prism sheet and an absorption axis direction of a polarizing plate are parallel to each other or perpendicular to each other, thereby preventing reduction in contrast. This is explained below.

(a) and (b) of Fig. 7 are drawings showing a relationship between the prism axis (groove direction of prism sheet) and intensity of light emitted from the backlight unit 60.

Specifically, intensity of light emitted from the backlight unit 60 at all azimuth angles ($\Phi$) and at polar angles ($\theta$) of 0° to 88° was measured.

(Measuring System and Measuring Sample)

The measuring system for measuring intensity of light emitted from the backlight unit 60 may be a measuring system illustrated in Fig. 6 for example.

Specifically, the measurement may be carried out by a viewing angle measuring device (EZContrast XL88: produced by ELDIM). Such measuring device can measure all azimuth angles ($\Phi$) and polar angles ($\theta$) of 0° to 88° together in a short time.

The results of measurements shown in (a) and (b) of Fig. 7 are obtained by the above viewing angle measuring device.

Definitions of the azimuth angle ($\Phi$) and the polar angle ($\theta$) are the same as those already explained above.

Next, configurations of measured samples used in the measurements shown in (a) and (b) of Fig. 7 are explained below.

The measured sample used in the measurement shown in (a) of Fig. 7 is referred to as a backlight unit A and the measured sample used in the measurement shown in (b) of Fig. 7 is referred to as a backlight unit B. Configurations of the backlight units A and B are the same as the configuration of the backlight unit 60 shown in Fig. 1.

That is, each of the backlight units A and B is designed such that two prism sheets (first prism sheet 66 and second prism sheet 68) are provided in such a manner that groove directions P1 and P2 (prism axes) of grooves 67 and 69 of the two prism sheets, respectively, cross each other at a right angle.

The backlight unit A is designed such that the prism axis P1 of the first prism sheet 66 is at an azimuth angle ($\Phi$)) of 0° and the prism axis P2 of the second prism sheet 68 is at an azimuth angle ($\Phi$) of 90°.

In contrast thereto, the backlight unit B is designed such that the prism axis P1 of the first prism sheet 66 is at an azimuth angle ($\Phi$) of 45° and the prism axis P2 of the second prism sheet 68 is at an azimuth angle ($\Phi$) of 135°.

That is, the backlights units A and B are different from each other in terms of directions of their orthogonal prism axes.

(Result of Measurement)

The following explains the results of the measurements with reference to (a) and (b) of Fig. 7 and (a) and (b) of Fig. 8.

As shown in (a) of Fig. 7, in the measured sample (backlight unit A) in which prism axes are positioned at azimuth angles ($\Phi$) of 0° and 90°, respectively, light emitted diagonally (light emitted with a polar angle ($\theta$)) has higher intensity at azimuth angles ($\Phi$) of 0° and 180° and at azimuth angles ($\Phi$) of 90° and 270°.

Further, as shown in (b) of Fig. 7, in the measured sample (backlight unit B) in which prism axes are positioned at azimuth angles ($\Phi$) of 45° and 135°, respectively, light emitted diagonally has higher intensity at azimuth angles ($\Phi$) of 45° and 225° and at azimuth angles ($\Phi$) of 135° and 315°.

In view of the results of the measurements shown in (a) and (b) of Fig. 7, the relation between the direction (orientation) of the prism axis of the backlight unit 60 and intensity of emitted light is such that light is likely to be emitted at a polar angle (θ) in an azimuth angle (Φ) direction parallel to the direction of a prism axis.

Further, (a) and (b) of Fig. 8 show how intensity distributions of emitted light, whose results of measurements are shown in (a) and (b) of Fig. 7, depend on polar angles (θ) in directions where azimuth angles (Φ)) are 0° and 45°, respectively.

(a) of Fig. 8 corresponds to the result of the measurement shown in (a) of Fig. 7 and (b) of Fig. 8 corresponds to the result of the measurement shown in (b) of Fig. 7.

As shown in (a) of Fig. 8, intensity of light emitted from the backlight unit A is higher when the polar angle (θ) exists in a direction where the azimuth angle (Φ) is 0° than when the polar angle (θ) exists in a direction where the azimuth angle (Φ) is 45°.

As shown in (b) of Fig. 8, intensity of light emitted from the backlight unit B is higher when the polar angle (θ) exists in a direction where the azimuth angle (Φ) is 45° than when the polar angle (θ) exists in a direction where the azimuth angle (Φ) is 0°.

As described above, in the backlight unit A, the prism axis is at azimuth angles (Φ) of 0° and 90°, and accordingly it is found that emitted light has higher intensity in a direction parallel to the prism axis.

In the similar manner, in the backlight unit B, the prism axis is at azimuth angles (Φ) of 45° and 135°, and accordingly it is found that emitted light has higher intensity in a direction parallel to the prism axis, as in the case of the backlight unit A.

(Prism Axis and Absorption Axis)

In the liquid crystal display device 10 of the present embodiment, as shown in Fig. 2 explained above, the prism axis of the prism sheet and the absorption axis of the polarizing plate are parallel to each other or perpendicular to each other. Accordingly, the reduction in contrast is less likely to appear. This is explained below.

As described above, in the liquid crystal display element 10 of the present embodiment shown in Fig. 2, the prism axis P1 of the first prism sheet 66 is at an azimuth angle (Φ) of 90°, the prism axis P2 of the second prism sheet 68 is at an azimuth angle (Φ) of 0°, the absorption axis direction H1 of the first polarizing plate 34 is at an azimuth angle (Φ) of 0°, and the absorption axis direction H2 of the first polarizing plate 36 is at an azimuth angle (Φ) of 90°.

(Transmission Characteristic of Liquid Crystal Display Element)

As explained above with reference to Fig. 5, in the two polarizing plates in which absorption axes are positioned in a crossed Nicols relationship, i.e. at azimuth angles (Φ) of 0° and 90°, respectively, inclined light incident at azimuth angles of 45°, 135°, 225°, and 315° is likely to be emitted in a normal direction.

In contrast thereto, inclined light incident at azimuth angles of 0°, 90°, 180°, and 270° is relatively less likely to be emitted in the normal direction.

(Angle Distribution of Intensity of Light emitted from Backlight Unit)

Next, angle distribution of intensity of light emitted from the backlight unit is explained. The angle distribution is obtained by plotting intensity of light emitted from the backlight unit at an azimuth angle of 0° to 360° and at a polar angle (θ) of 0° to 88°.

As explained above with reference to (a) of Fig. 7 etc., in the case of the backlight unit 60 in which two prism sheets are positioned in such a manner that prism axes of the two prism sheets are at azimuth angles of (Φ) of 90° and 0°, respectively, light inclined at azimuth angles (Φ) of 0°, 90°, 180°, and 270° is likely to be emitted from the backlight unit 60.

Accordingly, in the liquid crystal display device 10 of the present embodiment, azimuth angles (Φ) at which light is likely to be emitted diagonally from the backlight unit 60 (0°, 90°, 180°, and 270°) are not the same as azimuth angles (Φ) at which light is diagonally incident to the liquid crystal display element 20 and is likely to be emitted therefrom in its normal direction (45°, 135°, 225°, 315°), but are the same as azimuth angles (Φ) at which light is diagonally incident to the liquid crystal display element 20 and is less likely to be emitted therefrom in its normal direction (0°, 90°, 180°, and 270°).

Accordingly, it is possible to suppress intensity of light which is diagonally incident to the liquid crystal display element 20 and is then emitted therefrom in a normal direction.

Consequently, it is possible to suppress a reduction in contrast while maintaining brightness in the normal direction by using the prism sheet.

(In-plane Uniformity and Half Width)

Next, in-plane uniformity and half width of the backlight unit 60 are explained below.

First of all, the liquid crystal display device 10 is preferably configured such that light which is uniformly bright in a plane of the backlight unit 60 exits from the backlight unit 60 so that a display which is uniformly bright in a plane of the liquid crystal display device 10 is realized. Namely, the backlight unit 60 is preferably a uniform surface light source.

In order to realize such a characteristic, light exiting from the backlight unit 60 is required to have a high diffusibility. In order to realize such a diffusion characteristic, one possible option is to provide the backlight unit 60 with a diffusing sheet (upper diffusing sheet or lower diffusing sheet or upper diffusing sheet and lower diffusing sheet) having high diffusibility.

(Half Width)

Next, a half width of the backlight unit 60 is explained below.

The backlight unit 60 of the present embodiment has a half width of 31°. This is explained below.

(Measuring System)

Measurement of the half width can be carried out by using the measuring system for measuring intensity of light emitted from the backlight unit 60.

That is, as illustrated in Fig. 6, in the measuring system for measuring the half width, intensity of light emitted from the measured samples is measured with respect to all azimuth angles and all polar angles. Then, based on the measurement, there is found a half width, which is an inclined angle at which light emitted in a particular direction has an intensity which is half as high as an intensity of light emitted in a normal direction of the measured sample. Namely, there is found an angle at which light emitted in an inclined direction has an intensity which is half as high as an intensity of light emitted in the normal direction.

Note that a measuring device for carrying out measurement as mentioned above is not particularly limited. For example, EZcontrast 88 (product name, made by ELDIM) is usable for such measurement.

The backlight unit 60 serves as the measured sample, thereby measuring the half width in the backlight unit 60.

The definitions of the azimuth angle ($\Phi$) and the polar angle ($\theta$) have been described above. For example, the polar angle ($\theta$) indicates an angle of inclination from a normal direction of the surface (light exit plane 80) of the backlight unit 60 serving as a measured sample. The azimuth angle ($\Phi$) indicates an angle of counterclockwise rotation from a horizontal direction (right-left direction, lateral direction) on a plane of the measured sample.

(Upper Diffusing Sheet)

Note here that, in the present embodiment, a diffusing sheet in which light exiting from the backlight unit 60 has a half width of 31° is used for the upper diffusing sheet 70. The following description discusses this point.

The half width was measured for the backlight unit 60 which is schematically illustrated in Fig. 1 and serves as the measured sample. Specifically, the intensity of received light was measured in a state in which the light guiding plate 64, the lower diffusing sheet 72, the first prism sheet 66, the second prism sheet 68, and the upper diffusing sheet 70 were laminated in this order.

The azimuth angle ($\Phi$) at which light was incident was set to be in a range of 0° to 360°, and an average of eight half widths observed every 45° with respect to the azimuth angle ($\Phi$) in the range was calculated (the average is hereinafter referred to as "half width (0°-360°)").

Note that, in the present embodiment, a diffusing sheet which has a haze value of 55.0% was used for the upper diffusing sheet 70 and a diffusing sheet which has a haze value of 74.5% was used for the lower diffusing sheet 72.

The liquid crystal display device 10 of the present embodiment is designed to have the half width of 31°.

Consequently, it is possible to suppress intensity of light diagonally incident to the liquid crystal display element 20. This allows suppressing a reduction in contrast.

This allows the liquid crystal display device 20 to have a high contrast.

A "moiré" produced due to an interaction between two different periodic patterns, i.e. between a periodic pattern of a pitch of pixels of the liquid crystal display element 20 and a periodic pattern of a pitch of grooves of the prism sheet can be subdued by providing a diffusing sheet (upper diffusing sheet or lower diffusing sheet or upper diffusing sheet and lower diffusing sheet) between the prism sheet and the liquid crystal display element 20.

Further, in the liquid crystal display device 10 of the present embodiment, the liquid crystal display element 20 and the backlight unit 60 are positioned to be close to each other. Specifically, a distance between the liquid crystal display element and the backlight unit is approximately 1 mm.

Consequently, in spite of the fact that such close positioning is likely to increase a reduction in contrast due to the inclined light, it is possible to suppress the reduction in contrast.

The liquid crystal display element 20 and the backlight unit 60 may be provided to be attached to each other (the distance is 0 mm).

[Second Embodiment]

Another embodiment of the present invention is explained below, referring to Fig. 9 etc. Note that a configuration which is not described in the present embodiment is identical to the configuration described in the First Embodiment.

Note also that, for convenience, members having functions identical to those of the respective members illustrated in the drawings of the First Embodiment are given respective identical reference numerals, and a description of those members is omitted here.

A liquid crystal display device 10 of the present embodiment is configured to further include a reflective polarizer film with brightness enhancement effect 40, as compared to the configuration of the liquid crystal display device 10 of the First Embodiment.

Namely, as illustrated in Fig. 9, which is a cross-sectional view schematically illustrating the liquid crystal display device 10 of the present embodiment, the liquid crystal display device 10 of the present embodiment further includes A-PCF (Polarization Conversion Film) (product name, made by NITTO DENKO CORPORATION) as a reflective polarizer film with brightness enhancement effect 40 between (i) a first polarizing plate 34 of two polarizing plates (the first polarizing plate 34 and a second polarizing plate 36) which is closer to a backlight unit 60 and (ii) the backlight unit 60.

(Reflective polarizer film with brightness enhancement effect)

Note here that the reflective polarizer film with brightness enhancement effect 40 refers to a film in which, for example, a mechanism as described below causes an increase in light which enters into a polarizing plate adjacent to the film.

The mechanism is as follows. For example, in a case where polarized light which reaches the reflective polarizer film with brightness enhancement effect 40 includes a p-wave and an s-wave, the reflective polarizer film with brightness enhancement effect 40 causes (i) only one of the polarized waves such as the p-wave to be transmitted therethrough and (ii) the remaining s-wave to be reflected thereon. When the reflected s-wave is scattered and reflected by the backlight unit 60 and reach the reflective polarizer film with brightness enhancement effect 40 again, the s-wave thus reflected is partially changed into the p-wave. Then, the reflective polarizer film with brightness enhancement effect 40 causes the p-wave thus changed to be transmitted therethrough. Such operation is repeatedly carried out, so that only the p-wave for example is selectively transmitted through the reflective polarizer film with brightness enhancement effect 40.

Note that the reflective polarizer film with brightness enhancement effect 40 is not limited to the A-PCF (product name). For example, D-BEF (product name: abbreviation of Brightness Enhancement Film), made by Sumitomo 3M Limited) is also usable. Note also that this reflective polarizer film with brightness enhancement effect may be referred to as a polarized light reflecting film or a polarized light mirror film.

(Reflective polarizer film with brightness enhancement effect and Emitted Light)

Initially, with reference to (a) and (b) of Fig. 10, the following description discusses a difference in intensity of light exiting from the backlight unit 60 between (i) a case where the reflective polarizer film with brightness enhancement effect 40 is provided and (ii) a case where no reflective polarizer film with brightness enhancement effect 40 is provided.

(a) and (b) of Fig. 10 are graphs illustrating intensity of light exiting from the backlight unit 60.

Specifically, in (a) of Fig. 10, the backlight unit 60 (see Fig. 1), i.e., a laminate of the light guiding plate 64, the lower diffusing sheet 72, the first prism sheet 66, the second prism sheet 68, and the upper diffusing sheet 70 serves as a measured sample. (a) of Fig. 10 illustrates azimuth angle ($\Phi$) and polar angle ($\theta$) dependencies of light exiting from the light exit plane 80 of the measured sample in a normal direction.

In contrast, in (b) of Fig. 10, a measured sample is obtained by causing the A-PCF serving as the reflective polarizer film with brightness enhancement effect 40 to be laminated on the measured sample of (a) of Fig. 10. (b) of Fig. 10 illustrates azimuth angle ($\Phi$) and polar angle ($\theta$) dependencies (similarly to (a) of Fig. 10) of light exiting from the measured sample in the normal direction.

(a) and (b) of Fig. 11 schematically illustrate layer configurations of the backlight units 60 used in the measurements illustrated in (a) and (b) of Fig. 10, respectively.

(a) and (b) of Fig. 11 are cross sectional views schematically illustrating the layer configurations of the backlight units 60. The result of the measurement illustrated in (a) of Fig. 10 was obtained with respect to the backlight unit 60 whose cross sectional configuration is illustrated in (a) of Fig. 11. Similarly, the result of the measurement illustrated in (b) of Fig. 10 was obtained with respect to the backlight unit 60 whose cross sectional configuration is illustrated in (b) of Fig. 11 (this backlight unit 60 includes the reflective polarizer film with brightness enhancement effect 40).

Note that conditions such as a measuring system for the measurement of the intensities of the light correspond to the measuring system and the like described, referring to Fig. 6.

As illustrated in (a) and (b) of Fig. 10, when the backlight unit 60 is provided with the reflective polarizer film with brightness enhancement effect 40, in other words, when the backlight unit 60 is designed such that light is transmitted through the reflective polarizer film with brightness enhancement effect 40, there exists a wider range of inclined light that is diagonally emitted from the backlight unit 60 to the liquid crystal display element 20 and is emitted therefrom in its normal direction.

Namely, in the case of the backlight unit 60 including the reflective polarizer film with brightness enhancement effect 40, light is emitted from the light exit plane 80 of the backlight unit 60 at a wide polar angle ($\theta$) range in a range of substantially all the azimuth angles ($\Phi$).

Widening of a range of light emitted from the backlight unit 60 in the case where the reflective polarizer film with brightness enhancement effect 40 is provided is remarkable particularly in a range of an inclined angle (a polar angle ($\theta$) of 30° to 70°.

According to the above description, in a case where the reflective polarizer film with brightness enhancement effect 40 is provided between (i) the backlight unit 60 and (ii) the first polarizing plate 34 (polarizing plate closer to the backlight unit 60) of the liquid crystal display element 20, more amount of inclined light enters into the liquid crystal display element 20.

(Light Exiting from Liquid Crystal Display Device)

Next, the following description discusses how light exiting from the liquid crystal display element 20 in its normal direction depends on azimuth angle ($\Phi$) and polar angle ($\theta$) of incident light, referring to (a) and (b) of Fig. 12.

Note here that, in (a) of Fig. 12, the liquid crystal display element 20 according to the First Embodiment whose configuration is schematically illustrated in Fig. 1 serves as a measured sample and intensities of light were measured in the normal direction.

In contrast, in (b) of Fig. 12, the liquid crystal display element 20 of the present embodiment whose configuration is schematically illustrated in Fig. 9 (obtained by modifying the liquid crystal display element 20 of the First Embodiment to further include the A-PCF serving as the reflective polarizer film with brightness enhancement effect 40) serves as a measured sample.

Namely, (a) and (b) of Fig. 12 illustrate what difference exists between (i) the liquid crystal display element 20 including the reflective polarizer film with brightness enhancement effect 40 and (ii) the liquid crystal display element 20 including no reflective polarizer film with brightness enhancement effect 40, in terms of a dependency of light exiting from the liquid crystal display element 20 in its normal direction on azimuth angle ($\Phi$) and polar angle ($\theta$) of incident light.

Note that conditions such as a measuring system for the measurement of the intensities of received light correspond to the measuring system and the like described, referring to (b) and (c) of Fig. 3.

As illustrated in (a) and (b) of Fig. 12, the liquid crystal display element 20 including the reflective polarizer film with brightness enhancement effect 40 is more likely to cause light incident at the azimuth angles ($\Phi$) of 45°, 135°, 225°, and 315° and at polar angles ($\theta$) particularly of 30° to 70° to be emitted in the normal direction.

Fig. 13 is a graph illustrating a difference, between (i) the liquid crystal display element 20 including the reflective polarizer film with brightness enhancement effect 40 and (ii) the liquid crystal display element 20 including no reflective polarizer film with brightness enhancement effect 40, in light exiting from the liquid crystal display element 20 in the normal direction (a subtraction under similar conditions of the intensity of light exiting from the liquid crystal display element 20 including the reflective polarizer film with brightness enhancement effect 40 from the intensity of light exiting from the liquid crystal display element 20 including no reflective polarizer film with brightness enhancement effect 40).

As illustrated in Fig. 13, the liquid crystal display element 20 including the reflective polarizer film with brightness enhancement effect 40 is more likely to cause incident light at the azimuth angles ($\Phi$) of 45°, 135°, 225°, and 315° and at the polar angle ($\theta$) of 50° in particular to be emitted in the normal direction.

As described earlier, emission of such inclined light in the normal direction of the liquid crystal display element 20 tends to cause a reduction in contrast.

Note that measurement systems and measured samples for finding a difference in emission intensity for the measurement illustrated in Fig. 13 correspond to those described earlier. Note also that this measurement is carried out with respect to the liquid crystal display element 20 which carries out a black display.

(Liquid Crystal Display Device of The Present Embodiment)

As described above, when the reflective polarizer film with brightness enhancement effect 40 is provided between the backlight unit 60 and the liquid crystal display element 20, intensity of light diagonally incident to the liquid crystal display element 20 (light incident to the liquid crystal display element 20 in a direction that is likely to cause the light to be emitted from the liquid crystal display element 20 in the normal direction) gets larger than intensity of light incident to the liquid crystal display element 20 in the normal direction, resulting in a reduction in contrast.

Accordingly, in order to subdue a reduction in contrast, it is necessary to reduce more amount of inclined light when the reflective polarizer film with brightness enhancement effect 40 is provided than when no reflective polarizer film with brightness enhancement effect 40 is provided.

In this regard, the liquid crystal display device 10 of the present embodiment is designed to subdue intensity of light which is emitted from the backlight unit 60 and is incident to the liquid crystal display element 20 at an angle which is likely to cause the light to be emitted from the liquid crystal display element 20 in the normal direction. Specifically, the liquid crystal display device 10 of the present embodiment is designed to control an intensity characteristic in the azimuth angle direction of the backlight unit 60.

Using an equation, the above is expressed as follows: total intensity S of light transmitted through the liquid crystal display element in its normal direction is represented by

$$ S = \iint L(\theta, \Phi) \cdot T(\theta, \Phi) \sin\theta \, d\theta \, d\Phi \ \ldots \ \text{Equation (1)} $$

where $L(\theta, \Phi)$ represents an intensity characteristic of light emitted from the backlight unit 60 (characteristic shown in Figs. 7 and 10), $T(\theta, \Phi)$ represents transmittance of light with respect to a normal direction of the liquid crystal display element when the light is incident to the liquid crystal display element diagonally with a diagonal direction $(\theta, \Phi)$, and $\theta$ represents a polar angle and $\Phi$ represents an azimuth angle.

The present invention is such that the total intensity of light S is reduced by controlling $L(\theta, \Phi)$ in the equation (1).

Next, with reference to Fig. 14, the following explains an effect of improving a contrast by the present invention. Fig. 14 is a drawing showing a front contrast of a liquid crystal display device. Fig. 15 is a drawing showing intensity distribution of a backlight unit corresponding to Fig. 14.

Fig. 14 is a drawing showing the results of measuring a front contrast under a condition that A-PCF (referred to as PCF in Figs. 14 and 15) is provided or not, a condition that the axis angle of the prism sheet is (0°-180°, 90°-270°) or (45°-225°, 135°-315°), and a condition that the haze value of the upper diffusing sheet is 32.5%, 55%, 76%, or 81.4%. In the measurement, a liquid crystal display element of a VA mode employing a linear polarization type was used, and absorption axes of the first and second polarizing plates were set to 0° and 90°, respectively.

Underlined numerals out of the contrast values shown in Fig. 14 indicate contrast values improved when axis angles of the prism sheet are changed from (45° - 225°, 135° - 315°) to (0° - 180°, 90° - 270).

That is, in the case where A-PCF was not provided, when the diffusing sheet had haze values of 55% and 76%, a contrast value increased by changing the axis angle of the prism sheet. In contrast thereto, in the case where A-PCF was provided, when the diffusing sheet had a haze value of 32.5%, the contrast value increased.

In the case where A-PCF is not provided, when the upper diffusing sheet has a higher haze value (e.g. 81.4%), $\Phi$ dependency of intensity characteristic $L(\theta, \Phi)$ of light emitted from the backlight unit (i.e. directivity to the azimuth angle direction is reduced and the intensity L in relation to $\theta$ does not change greatly regardless of the azimuth angle $\Phi$). Consequently, change of a contrast value when the axis angle of the prism sheet is changed is little. Further, in the case where A-PCF is provided, A-PCF makes $\Phi$ dependency of the intensity characteristic $L(\theta, \Phi)$ small. Consequently, the degree of improvement in contrast by change of the axis angle of the prism sheet is smaller compared with the case where A-PCF is not provided.

(Configuration Examples)

The following specifically explains configuration examples of the liquid crystal display device 10 of the present invention with reference to drawings.

Fig. 16 is a perspective view showing an example of the liquid crystal display device (linear polarization type of VA mode) 10. As shown in Fig. 16, the liquid crystal display element 10 of the present embodiment is designed such that the prism axis P1 of the first prism sheet 66 is in the azimuth angle ($\Phi$) of 90°, the prism axis P2 of the second prism sheet 68 is in the azimuth angle ($\Phi$) of 0°, the absorption axis direction H1 of the first polarizing plate 34 is in the azimuth angle ($\Phi$) of 0°, and the absorption axis direction H2 of the second polarizing plate 36 is in the azimuth angle ($\Phi$) of 90°.

Therefore, it is possible to suppress intensity of light emitted from the backlight unit 60 particularly in a direction of a polar angle (θ) of 50° or so at the azimuth angle (Φ) of 45°, 135°, 225°, and 315° which is likely to cause light incident to the liquid crystal display element 20 at the azimuth angle via the reflective polarizer film with brightness enhancement effect 40 to result in a lower contrast.

Therefore, it is possible to suppress a reduction in contrast due to emission of such inclined light from the liquid crystal display element 20 in the normal direction. Specifically, compared with a configuration in which a direction in which intensity of emitted light is high according to angle (azimuth angle (Φ) and polar angle (θ)) dependencies of light emitted from the backlight unit 60 is the same as a direction in which light diagonally incident to the liquid crystal display element 20 is likely to be emitted in its normal direction (low contrast configuration), the liquid crystal display device 10 of the present embodiment shown in Fig. 16 allows increase in contrast by approximately 3% to 4%.

The low contrast configuration here indicates a configuration shown in Fig. 17 for example. Fig. 17 is a cross sectional view schematically showing a configuration of the liquid crystal display device 10.

An example of such configuration (low contrast configuration) is a configuration in which the prism axis of the prism sheet and the absorption axis of the polarizing plate form an angle of 45° or 135°.

Specifically, as shown in Fig. 17, an example of such configuration is a configuration in which the prism axis P1 of the first prism sheet 66 is in the azimuth angle (Φ) of 45°, the prism axis P2 of the second prism sheet 68 is in the azimuth angle (Φ) of 135°, the absorption axis direction H1 of the first polarizing plate 34 is in the azimuth angle (Φ) of 0°, and the absorption axis direction H2 of the second polarizing plate 36 is in the azimuth angle (Φ) of 90°.

(Other Configuration)

The present invention is not limited to the description of the embodiments above, but may be altered by a skilled person within the scope of the claims. An embodiment based on a proper combination of technical means disclosed in different embodiments is encompassed in the technical scope of the present invention.

(Prism Axis and Absorption Axis)

For example, the aforementioned configuration of the prism axis direction of the prism sheet and the absorption axis direction of the polarizing plate is such that the prism axis P1 of the first prism sheet 66 is in the azimuth angle (Φ) of 90°, the prism axis P2 of the second prism sheet 68 is in the azimuth angle (Φ) of 0°, the absorption axis direction H1 of the first polarizing plate 34 is in the azimuth angle (Φ) of 0°, and the absorption axis direction H2 of the second polarizing plate 36 is in the azimuth angle (Φ) of 90°, as shown in Fig. 16.

The configuration of the present invention is not limited to the aforementioned configuration, and may be arranged such that the prism axes P1 and P2 are rotated by the azimuth angle (Φ) of 90°.

That is, as shown in Fig. 18 which is a drawing schematically showing a main part of the liquid crystal display device 10 of the present invention, the configuration of the present invention may be such that the prism axis P1 of the first prism sheet 66 is in the azimuth angle (Φ) of 0°, the prism axis P2 of the second prism sheet 68 is in the azimuth angle (Φ) of 90°, the absorption axis direction H1 of the first polarizing plate 34 is in the azimuth angle (Φ) of 0°, and the absorption axis direction H2 of the second polarizing plate 36 is in the azimuth angle (Φ) of 90°.

Further, as shown in Fig. 19 which is a drawing schematically showing a main part of the liquid crystal display device 10 of the present invention, the configuration of the present invention may be such that the prism axis P1 of the first prism sheet 66 is in the azimuth angle (Φ) of 45°, the prism axis P2 of the second prism sheet 68 is in the azimuth angle (Φ) of 135°, the absorption axis direction H1 of the first polarizing plate 34 is in the azimuth angle (Φ) of 135°, and the absorption axis direction H2 of the second polarizing plate 36 is in the azimuth angle (Φ) of 45°.

In the configuration shown in Fig. 19, the absorption axis direction H2 of the second polarizing plate 36 closer to the viewer V of the liquid crystal display device 10 is not a so-called axis direction such as an azimuth angle (Φ) of 0° or 90°, but is inclined with respect to the axis direction.

Consequently, even when the viewer V of the liquid crystal display device 10 wears polarized sunglasses 90, an image displayed by the liquid crystal display device 10 is not completely blocked by the polarized sunglasses 90.

That is, in a case where the viewer V wears the polarized sunglasses 90, if the absorption axis of the polarized sunglasses 90 and the absorption axis direction H2 of the second polarizing plate 36 cross each other at a right angle, the viewer V cannot see an image displayed by the liquid crystal display device 10.

It is often that the absorption axis of the polarized sunglasses 90 is in a two-arrow direction G1 or G2. That is, it is often that the absorption axis of the polarized sunglasses 90 is in the vertical direction G1 or the horizontal direction G2 when the viewer V wears the polarized sunglasses 90.

In this regard, as shown in Fig. 19, when the absorption axis direction H2 of the second polarizing plate 36 is in a direction where azimuth angle (Φ) is 45°, even if the absorption axis of the polarized sunglasses 90 is in the vertical direction G1 or the horizontal direction G2, the viewer V does not suffer from the problem that an image displayed by the liquid crystal display device 10 cannot be seen at all.

(Liquid Crystal Display Mode)

The above description discusses the linear polarization type of the vertical alignment mode. A liquid crystal display mode of the present invention is not limited to this. Of the vertical alignment mode liquid crystal displays, a so-called circular polarization type is also usable. The circular polarization type is configured such that: liquid crystal molecules are not subjected to a multi-domain alignment but are omnidirectionally aligned by use of a rivet or the like; and phase plates such as λ/4 plates are provided between a liquid crystal layer and respective polarizing plates. Note that differences between the aforementioned linear polarization type and the circular polarization type are described later, referring to Fig. 21.

Note that the present invention is also usable for, for example, a TN (Twisted Nematic) mode and an IPS (In Plane Switching) mode as well as the vertical alignment mode.

Note here that scattering characteristics of inclined light of the foregoing liquid crystal display modes are explained below, referring to (a) through (e) of Fig. 20.

Note here that (a) through (e) of Fig. 20 are graphs illustrating light scattering characteristics of the respective liquid crystal display modes. The following description specifically discusses this point.

(a) through (e) of Fig. 20 illustrate incidence direction (azimuth angle ($\Phi$) and polar angle ($\theta$)) dependencies of intensities of light exiting from a normal direction in measured samples. The measured sample of (a) of Fig. 20 includes polarizing plates which are provided on both sides of a glass substrate so that their respective optical axes cross each other at right angles (in a crossed Nicols relationship). The measured sample of (b) of Fig. 20 is of the circular polarization type (already described) of a vertical alignment mode liquid crystal display element. The measured sample of (c) of Fig. 20 includes a liquid crystal display element employing the IPS mode. The measured sample of (d) of Fig. 20 includes a liquid crystal display element employing the TN mode. The measured sample of (e) of Fig. 20 is the vertical alignment mode liquid crystal display element of the linear polarization type described in the above embodiments.

As illustrated in (a) through (e) of Fig. 20, inclined light is more likely to be emitted in the normal direction in the measured samples including the liquid crystal layers (see (b) through (e) of Fig. 20), as compared to the measured sample including no liquid crystal layer but only the glass substrate and the polarizing plates (see (a) of Fig. 20).

Accordingly, as described earlier, control of a direction of light exiting from the backlight 60 can prevent a reduction in contrast.

Further, as illustrated in (e) of Fig. 20, inclined light is more likely to be emitted in the normal direction in the linear polarization type of the vertical alignment mode. As a result, an effect of the present invention of preventing a reduction in contrast is more remarkable in the linear polarization type.

Note here that the circular polarization type and the linear polarization type are explained below, referring to Fig. 21 illustrating a difference between these two types of the vertical alignment mode.

As illustrated in Fig. 21, liquid crystals (liquid crystal molecules) of the liquid crystal layer are omnidirectionally aligned centering around a protrusion such as a rivet in the circular polarization type of the vertical alignment mode.

In contrast, the liquid crystal layer is divided into a plurality of alignment regions R in plan view in the linear polarization type of the vertical alignment mode. Note here that an alignment region refers to a region in which liquid crystals (liquid crystal molecules) are aligned in a direction different from a direction in which liquid crystals (liquid crystal molecules) of a part adjacent to the region are aligned. Fig. 21 illustrates an example of a four-domain alignment.

The circular polarization type and the linear polarization type are different in configuration of a layer of a liquid crystal display element in accordance with the difference in configuration of the liquid crystal layer. Namely, in the linear polarization type, only polarizing plates are provided on both sides of the liquid crystal layer, respectively. In contrast, in the circular polarization type, phase plates such as λ/4 plates (circularly polarizing plates) in addition to polarizing plates are provided on both sides of the liquid crystal layer (a liquid crystal panel), respectively.

Specifically, for example, phase plates are provided on both sides of the liquid crystal layer, respectively, and then polarizing plates are provided on outer sides of the respective phase plates.

The linear polarization type of the vertical alignment mode generally has a higher contrast than the circular polarization type of the vertical alignment mode. As a result, a backlight of the present invention more effectively functions in the linear polarization type than in the circular polarization type.

Note that measurement conditions such as a measuring system used in the measurement of light intensities whose results are shown in (a) through (e) of Fig. 20 are similar to those described earlier, referring to (a) and (b) of Fig. 3 and the like.

Next, with reference to Fig. 22 showing configurations etc. of the polarizing plates of the individual liquid crystal modes, the following explains an azimuth angle at which inclined light should not be incident in the individual liquid crystal modes.

Fig. 22 shows representative examples of positions of polarizing plates and azimuth angles determined based on a scattering characteristic drawing as azimuth angles at which the inclined light should not be incident, with respect to each of the liquid crystal modes explained above with reference to (b) through (d) of Fig. 20.

In the VA mode employing the linear polarization type and the TN mode, the azimuth angle (Φ) at which inclined light should not be incident is 45° from the absorption axis of the polarizing plate. However, preferable absorption axis angle of the polarizing plate is different between the VA mode employing the linear polarization type and the TN mode.

In contrast thereto, in the VA mode employing the circular polarization type, the azimuth angle (Φ) at which the inclined light should not be incident is not 45° from the absorption axis of the polarizing plate, but 0, 180, 90, and 270°, particularly 0° and 180°, in a case where the absorption axis of the back side polarizing plate (first polarizing plate 34) is at 63° and the absorption axis of the front side polarizing plate (second polarizing plate 36) is at - 27°.

Further, in the IPS mode, dependence of the scattering characteristic on the azimuth angle direction was not particularly found. The liquid crystal display element of the IPS mode did not include phase plates.

(Others)

The above description discusses a prism sheet which has triangular grooves. Grooves of a prism sheet are not limited to this in shape, and can also be rounded and be constituted by semicircular peaks and valleys.

Furthermore, in the above description, the number of the prism sheets used is two. Prism sheets are not limited to this in number. For example, no prism sheet or one (1) prism sheet is also usable.

Moreover, in the above description, two diffusing sheets, i.e., the upper diffusing sheet 70 and the lower diffusing sheet 72 are provided in the backlight unit 60. Only one of the upper diffusing sheet 70 and the lower diffusing sheet 72 can be provided in the backlight unit 60.

Further, in the above description, the upper diffusing sheet 70 and the lower diffusing sheet 72 are made of the same material. The upper diffusing sheet 70 and the lower diffusing sheet 72 can also be made of different materials.

Industrial Applicability

A backlight unit and a liquid crystal display device of the present invention, which are capable of realizing a high-contrast display, are preferably usable for display applications which are required to realize a high-definition display.

**Claims**

1. A liquid crystal display device, comprising:

    a liquid crystal display element including a liquid crystal layer, a light-incident side polarizing plate, and a light-exit side polarizing plate, the light-incident side polarizing plate and the light-exit side polarizing plate being provided on both sides of the liquid crystal layer, respectively; and
    a backlight unit causing light existing through a light exit plane thereof to be incident to the liquid crystal display element,
    the backlight unit being provided in such a manner that light incident from the backlight unit to the liquid crystal display element in a diagonal direction that causes the light to be likely to be emitted from the liquid crystal display element in a normal direction thereof has lower intensity than light incident from the backlight unit to the liquid crystal display element in another diagonal direction.

2. The liquid crystal display device as set forth in claim 1, wherein the backlight includes a light guiding plate, a diffusing sheet, and one or more prism sheets.

3. The liquid crystal display device as set forth in claim 1 or 2, further comprising a reflective polarizer film with brightness enhancement effect provided between the liquid crystal display element and the backlight unit.

4. The liquid crystal display device as set forth in any one of claims 1 through 3, wherein the liquid crystal display element and the backlight unit are provided to be close to each other.

5. The liquid crystal display device as set forth in any one of claims 1 through 4, wherein a distance between the liquid crystal display element and the backlight unit is not less than 0 mm and not more than 10 mm.

6. The liquid crystal display device as set forth in claim 2, wherein the diagonal direction that causes the light to be likely to be emitted from the liquid crystal display element in a normal direction thereof and a prism axis of the prism sheet form an angle of not less than 20° and not more than 70°, or an angle of not less than 110° and not more than 160°.

**7.** The liquid crystal display device as set forth in claim 2, wherein
the liquid crystal display element is a vertical alignment mode liquid crystal display element of a linear polarization type, and
an absorption axis of the light-incident side polarizing plate and a prism axis of the prism sheet form an angle of not less than - 25° and not more than 25°, or an angle of not less than 65° and not more than 115°.

**8.** The liquid crystal display device as set forth in claim 2, wherein
the liquid crystal display element is a vertical alignment mode liquid crystal display element of a linear polarization type, and
an absorption axis of the light-incident side polarizing plate and a prism axis of the prism sheet form an angle of not less than - 15° and not more than 15°, or an angle of not less than 75° and not more than 105°.

**9.** The liquid crystal display device as set forth in claim 2, wherein
the liquid crystal display element is a vertical alignment mode liquid crystal display element of a linear polarization type, and
an absorption axis of the light-incident side polarizing plate and a prism axis of the prism sheet form an angle of not less than - 5° and not more than 5°, or an angle of not less than 85° and not more than 95°.

**10.** The liquid crystal display device as set forth in claim 2, wherein
the liquid crystal display element is a vertical alignment mode liquid crystal display element of a circular polarization type, and
an absorption axis of the light-incident side polarizing plate and a prism axis of the prism sheet form an angle of not less than - 43° and not more than 7°, or an angle of not less than 47° and not more than 97°.

**11.** The liquid crystal display device as set forth in claim 2, wherein
the liquid crystal display element is a vertical alignment mode liquid crystal display element of a circular polarization type, and
an absorption axis of the light-incident side polarizing plate and a prism axis of the prism sheet form an angle of not less than - 33° and not more than - 3°, or an angle of not less than 57° and not more than 87°.

**12.** The liquid crystal display device as set forth in claim 2, wherein
the liquid crystal display element is a vertical alignment mode liquid crystal display element of a circular polarization type, and
an absorption axis of the light-incident side polarizing plate and a prism axis of the prism sheet form an angle of not less than - 23° and not more than - 13°, or an angle of not less than 67° and not more than 77°.

**13.** The liquid crystal display device as set forth in claim 2, wherein
the liquid crystal display element is a TN mode liquid crystal display element, and
an absorption axis of the light-incident side polarizing plate and a prism axis of the prism sheet form an angle of not less than - 25° and not more than 25°, or an angle of not less than 65° and not more than 115°.

**14.** The liquid crystal display device as set forth in claim 2, wherein
the liquid crystal display element is a TN mode liquid crystal display element, and
an absorption axis of the light-incident side polarizing plate and a prism axis of the prism sheet form an angle of not less than - 15° and not more than 15°, or an angle of not less than 75° and not more than 105°.

**15.** The liquid crystal display device as set forth in claim 2, wherein
the liquid crystal display element is a TN mode liquid crystal display element, and
an absorption axis of the light-incident side polarizing plate and a prism axis of the prism sheet form an angle of not less than - 5° and not more than 5°, or an angle of not less than 85° and not more than 95°.

**16.** The liquid crystal display device as set forth in any one of claims 1 through 15, wherein there are provided two prism sheets whose prism axes cross each other at a right angle.

**17.** The liquid crystal display device as set forth in any one of claims 1 through 16, wherein light exiting through the light exit plane of the backlight unit has a half width of not more than 44°.

**18.** The liquid crystal display device as set forth in claim 17, wherein the half width is not less than 20° and not more than 40°.

F I G. 1

F I G. 2

10

L

P2

H1

S

P1

H2

67    69

64    66    68    34    22    36

60         20

V

90(°)  AZIMUTH ANGLE (φ)

0(°)

180(°)

270(°)

FIG. 3

(a)

(b)

FIG. 4

RELATIONSHIP BETWEEN ANGLE OF INCIDENT LIGHT AND
INTENSITY OF TRANSMITTED LIGHT FROM FRONT
($\phi$ (AZIMUTH ANGLE) = 0° )

## F I G. 5

0            0.001

⟶ BRIGHTNESS:HIGH

## F I G. 6

MEASURING DEVICE
(Ezcontrast)

MEASURED SAMPLE

## F I G. 7

(a)

(b)

## F I G. 8

(a)

RELATIONSHIP BETWEEN BACKLIGHT INTENSITY
AND POLAR ANGLE (ACTUALLY MEASURED)
BEF AXIS AZIMUTH ANGLE 0° AND 90°

AZIMUTH ANGLE
......... AZIMUTH ANGLE 0°
——— AZIMUTH ANGLE 45°

BRIGHTNESS (a. u.)

POLAR ANGLE (° )

(b)

RELATIONSHIP BETWEEN BACKLIGHT INTENSITY
AND POLAR ANGLE (ACTUALLY MEASURED)
BEF AXIS AZIMUTH ANGLE 45° AND 135°

AZIMUTH ANGLE
......... AZIMUTH ANGLE 0°
——— AZIMUTH ANGLE 45°

BRIGHTNESS (a. u.)

POLAR ANGLE (° )

FIG. 9

# FIG. 10

(a)

(b)

FIG. 11

(a)

70

68

66

72

64

(b)

40

70

68

66

72

64

F I G. 1 2

(a)

(b)

FIG. 13

AZIMUTH ANGLE 45°  POLAR ANGLE 50°

BRIGHTNESS:HIGH

F I G. 1 4

| WITH OR WITHOUT PCF | AXIS ANGLE OF PRISM SHEET | HAZE VALUE OF UPPER DIFFUSING SHEET (%) | | | |
|---|---|---|---|---|---|
| | | 32. 5 | 55 | 76 | 81. 4 |
| WITH NO PCF | 0° −180° , 90° −270° | − | 4359 | 3945 | 2454 |
| | 45° −225° , 135° −315° | − | 4196 | 3846 | 2470 |
| WITH PCF | 0° −180° , 90° −270° | 3083 | 2922 | 2566 | 1786 |
| | 45° −225° , 135° −315° | 2948 | 2941 | 2577 | 1777 |

FIG. 15

F I G. 1 6

90(°) AZIMUTH ANGLE (φ)

0(°)

180(°)

270(°)

F I G. 1 7

90(°) AZIMUTH ANGLE (φ)

0(°)

180(°)

270(°)

FIG. 18

90(°) AZIMUTH ANGLE (φ)

0(°)

180(°)

270(°)

FIG. 19

90(°)  AZIMUTH ANGLE (φ)

0(°)

180(°)

270(°)

# FIG. 20

(a) POLARIZING PLATES
•ATTACHED TO FRONT AND
  REAR SURFACES OF GLASS
•CROSSED NICOLS

0      1.0007
⟶ BRIGHTNESS:HIGH

(b) VERTICAL ALIGNMENT MODE
•CIRCULAR POLARIZATION TYPE

0      0.00094
⟶ BRIGHTNESS:HIGH

(c) IPS MODE

0      0.00080734
⟶ BRIGHTNESS:HIGH

(d) TN MODE

0      0.00040848
⟶ BRIGHTNESS:HIGH

(e) "MVA MODE"
(VERTICAL ALIGNMENT MODE
·LINEAR POLARIZATION TYPE)

0      0.0002554
⟶ BRIGHTNESS:HIGH

FIG. 21

| | | | CIRCULAR POLARIZATION TYPE | LINEAR POLARIZATION TYPE |
|---|---|---|---|---|
| VERTICAL ALIGNMENT MODE | | | | |
| CONFIGURATION | POLARIZING PLATE · PHASE PLATE (EXAMPLE) | | CIRCULARLY POLARIZING PLATE (POLARIZING PLATE + λ/4 PLATE) | LINEARLY POLARIZING PLATE (WITH NO λ/4 PLATE) |
| | | | POLARIZING PLATE / λ/4 PLATE (PHASE PLATE) / LIQUID CRYSTAL PANEL (LIQUID CRYSTAL LAYER) / λ/4 PLATE (PHASE PLATE) / POLARIZING PLATE | POLARIZING PLATE / LIQUID CRYSTAL PANEL (LIQUID CRYSTAL LAYER) / POLARIZING PLATE |
| | LIQUID CRYSTAL LAYER (EXAMPLE) | | OMNIDIRECTIONAL ALIGNMENT | FOUR-DOMAIN ALIGNMENT |
| | | | LIQUID CRYSTAL / RIVET | ALIGNMENT REGION (R) |

FIG. 22

| LIQUID CRYSTAL MODE | ABSORPTION AXIS OF FRONT POLARIZING PLATE | ABSORPTION AXIS OF REAR POLARIZING PLATE | AZIMUTH ANGLE AT WHICH LIGHT SHOULD BE SUPPRESSED IN CONSIDERATION OF SCATTERING CHARACTERISTIC VIEW | CORRESPONDENCE WITH FIG. 20 |
|---|---|---|---|---|
| 1) VA MODE EMPLOYING LINEAR POLARIZATION TYPE | 0° | 90° | 45° , 135° , 225° , 315° | (d) |
| 2) VA MODE EMPLOYING CIRCULAR POLARIZATION TYPE | -27° | 63° | 0° , 180° , 90° , 270° (LIGHT AT 0° AND 180° SHOULD BE MORE SUPPRESSED THAN LIGHT AT 90° AND 270°) | (b) |
| 3) IPS MODE | 165° | 75° | SAME AT ALL AZIMUTH ANGLE | (c) |
| 4) TN MODE | 45° | 135° | 0° , 90° , 270° , 180° | (d) |

FIG. 23

FIG. 24

FIG. 25

FIG. 26

## INTERNATIONAL SEARCH REPORT

International application No.

PCT/JP2008/072543

A.  CLASSIFICATION OF SUBJECT MATTER
*G02F1/13357*(2006.01)i, *G02F1/1335*(2006.01)i, *G02F1/139*(2006.01)i

According to International Patent Classification (IPC) or to both national classification and IPC

B.  FIELDS SEARCHED

Minimum documentation searched (classification system followed by classification symbols)
G02F1/13357, G02F1/1335, G02F1/139

Documentation searched other than minimum documentation to the extent that such documents are included in the fields searched
Jitsuyo Shinan Koho        1922-1996   Jitsuyo Shinan Toroku Koho   1996-2009
Kokai Jitsuyo Shinan Koho  1971-2009   Toroku Jitsuyo Shinan Koho   1994-2009

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2004-233938 A  (Mitsubishi Rayon Co., Ltd.), 19 August, 2004 (19.08.04), & US 2008/0055926 A1    & WO 2004/053539 A1 & KR 10-2005-0085345 A   & CN 1720467 A | 1-18 |
| A | WO 2007/015328 A1  (Hitachi Chemical Co., Ltd.), 08 February, 2007 (08.02.07), & CN 101233363 A | 1-18 |

☐  Further documents are listed in the continuation of Box C.      ☐  See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 05 March, 2009 (05.03.09) | 17 March, 2009 (17.03.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003121847 A
- JP 2003015133 A
- JP 8022000 A
- JP 2000122046 A
- JP 2003084283 A